# EUROPEAN PATENT SPECIFICATION

(11) **EP 2 240 012 B1**
(45) Date of publication and mention of the grant of the patent: **07.10.2015**
(21) Application number: 08868396.6
(22) Date of filing: 19.12.2008
(51) Int. Cl.: A01N 1/02, F25D 3/00, A61J 1/05, B65D 81/38

(54) **SYSTEMS AND METHODS FOR FREEZING, STORING AND THAWING BIOPHARMACEUTICAL MATERIALS**
SYSTEME UND VERFAHREN FÜR DAS GEFRIEREN, DIE AUFBEWAHRUNG UND DAS AUFTAUEN VON BIOPHARMAZEUTISCHEN MATERIALIEN
SYSTEMES ET PROCEDES PERMETTANT DE CONGELER, DE STOCKER ET DE DECONGELER DES PRODUITS BIOPHARMACEUTIQUES

(30) Priority: 21.12.2007 US 963106; 24.09.2008 US 236933
(43) Date of publication of application: 20.10.2010
(73) Proprietor: Sartorius Stedim North America Inc., Springfield, MI 65802 (US)
(72) Inventor: CUTTING, Jonathan, Fairfield, CA 94533 (US); GAY, Isabelle, 13124 Peypin (FR); LEE, Eric, K., Acton, MA 01720 (US); VOUTE, Nicolas, 13780 Cuges Les Pins (FR)
(74) Representative: Derambure, Christian
(86) International application number: PCT/US2008/087728
(87) International publication number: WO 2009/086136

(56) References cited:
- EP-A1- 0 718 212
- EP-A1- 1 112 946
- EP-A1- 1 302 410
- WO-A1-92/00881
- WO-A1-03/037082
- WO-A1-03/086269
- DE-A1- 4 433 147
- DE-A1- 10 030 102
- FR-A1- 2 887 335
- US-A- 4 470 264
- US-A- 5 390 791
- US-A1- 2007 240 432
- US-B1- 6 378 314
- Delta T (Pharma Logistic): "Total Temperature Security - Catalogue 2006" Internet citation, [Online] 27 April 2006 (2006-04-27), XP002567985 Retrieved from the Internet: URL:http://www.deltat.de/home.html> [retrieved on 2010-02-09]

## Description

### CROSS REFERENCE TO RELATED APPLICATIONS

This application claims priority from U.S. Patent Application Serial No. 11/963,106, filed on December 21, 2007, entitled SYSTEMS AND METHODS FOR FREEZING, STORING AND THAWING BIOPHARMACEUTICAL MATERIALS , and U.S. Patent Application Serial No. 12/236,933, filed September 24, 2008, entitled SYSTEMS AND METHODS FOR STORING BIOPHARMACEUTICAL MATERIALS.

### TECHNICAL FIELD

This invention relates, in general, to biopharmaceutical materials, preservation methods and systems, and more particularly to systems and methods for freezing, storing and thawing biopharmaceutical materials.

### BACKGROUND ART

Preservation of biopharmaceutical materials, such as cryopreservation, is important in the manufacture, use, transport, storage and sale of such materials. For example, biopharmaceutical materials are often preserved by freezing between processing steps and during storage. Similarly, biopharmaceutical materials are often frozen and thawed as part of the development process to enhance the quality or to simplify the development process.

When freezing biopharmaceutical materials, the overall quality, and in particular pharmaceutical activity, of the biopharmaceutical materials is desirably preserved, without substantial degradation of the biopharmaceutical materials.

The preservation of biopharmaceutical material, particularly in bulk quantities, often involves placing a container containing liquid biopharmaceutical material in a cabinet freezer, chest freezer or walk-in freezer and allowing the biopharmaceutical material to freeze. Specifically, the container, which is typically one or more liters in volume and may range up to ten or more liters, is often placed on a shelf in the cabinet freezer, chest freezer or walk-in freezer and the biopharmaceutical material is allowed to freeze. These containers may be stainless-steel vessels, plastic bottles or carboys, or plastic bags. They are typically filled with a specified volume to allow for freezing and expansion and then transferred into the freezers at temperatures typically ranging from negative 20 degrees Celsius to negative 70 degrees Celsius or below.

Disposable bulk storage containers such as plastic bags or other flexible containers often are damaged, leading to loss of the biopharmaceutical material. Particularly, the volumetric expansion of the biopharmaceutical materials during freezing could generate excessive pressure in an over filled bag or in a pocket of occluded liquid adjoining the bag material, possibly leading to rupture or damage to the integrity of the bag. Moreover, handling of such disposable containers, such as plastic bags, during freezing, thawing, or transportation of these containers often result in damage thereof, due, for example, to shock, abrasion, impact, or other mishandling events arising from operator errors or inadequate protection of the bags in use.

Similarly, thawing of bulk biopharmaceutical materials may involve removing them from a freezer and allowing them to thaw at room temperature. In certain situations thawing can also lead to product loss. In addition, in certain situations rapid thawing of biopharmaceutical materials may result in less product loss than slower thawing. Further, it may also be desirable to control temperature of the biopharmaceutical materials during a thawing process since exposure of some biopharmaceutical materials to elevated temperatures in certain situations may also lead to product loss. For example, it may be desirable to maintain a thawing biopharmaceutical material at about 0 °C when still in liquid and solid form during thawing thereof. In situations where thawing is desirable it is necessary to protect the biopharmaceutical material from damage which may occur due to impact or rupture to the containers. Documents EP1302410A1 and DE10030102A1 disclose systems for transporting biopharmaceutical materials. The systems comprise an inner rim and an outer rim. Document WO 03/086269 A1 discloses a container for transporting goods at a constant temperature. The container is formed by two different parts which bounds a cavity. The catalogue Delta T (Pharma Logistic): "Total Temperature Security - Catalogue 2006" includes systems for transporting biopharmaceutical materials.

However, there is a need for systems and methods for freezing, thawing, and storing biopharmaceutical materials, including in bulk quantities, that do not result in loss of biopharmaceutical material, and are repeatable. In addition, there is a need for containers usable for the freezing, thawing and storing of biopharmaceutical materials, including in bulk quantities, which allow the freezing, thawing and transporting of biopharmaceutical materials therein without damage thereto, and which allow for the storage thereof to occur in an organized manner while protecting the biopharmaceutical material.

### SUMMARY OF THE INVENTION

The present invention provides a system for use in freezing, storing and thawing biopharmaceutical materials according to claim 1.

### BRIEF DESCRIPTION OF THE DRAWINGS

The subject matter which is regarded as the invention is particularly pointed out and distinctly claimed in the claims at the conclusion of the specification. The foregoing and advantages of the invention will be readily understood from the following detailed description of preferred embodiments taken in conjunction with the accompanying drawings in which:
FIG. 1 is a perspective view of a holder receiving a container in accordance with the present invention;
FIG. 2 is a perspective view of a first portion and second portion of the holder of FIG. 1;
FIG. 3 is a top elevational view of a container receivable in the holder of FIG. 1;
FIG. 4 is a perspective view of a portion of the holder of FIG. 1 receiving the container of FIG. 3;
FIG. 5 is a side elevational view of the holder of FIG. 1 stacked on a second holder in accordance with the present invention;
FIG. 6 is a side cross-sectional view of a portion of FIG. 2 showing a portion of a bottom portion of the holder receiving the container of FIG. 3 in simplified form;
FIG. 7 is a cross-sectional view of another holder in accordance with the present invention and showing opposite bottom portions curving toward each other;
FIG. 8 is a side-elevational view of another holder in accordance with the present invention showing the first portion of a first holder stacked on the second portion of a second holder
FIG. 9 is a perspective view of a top portion of another holder in accordance with the present invention;
FIG. 10 is a perspective view of a bottom portion of the holder of FIG. 9;
FIG. 11 is a perspective view of a top portion of a further holder in accordance with the present invention;
FIG. 12 is a perspective view of a bottom portion of the holder of FIG. 11;
FIG. 13 is a side cross-sectional view in simplified form of a portion of another holder in accordance with the present invention, receiving the container of FIG. 3 ;
FIG. 14 is a side cross-sectional view of the holder of FIG. 13 in simplified form showing top and bottom portions thereof exploded relative to a protective member thereof;
FIG. 15 is a side cross-sectional view in simplified form of the top and bottom portions of FIG. 14 connected to the protected member thereof;
FIG. 16 is a perspective view of a holder receiving a container in accordance with the present invention;
FIG. 17 is an exploded perspective view of a first portion and second portion of the holder of FIG. 16 showing a container therebetween not depicted in FIG. 16;
FIG. 18 is a perspective view of the holder of FIG. 16 receiving a monitoring device in accordance with the present invention; and
FIG. 19 is an exploded perspective view of the holder of FIG. 18 showing top and bottom portions thereof, and a container having a monitoring device therebetween.

### DETAILED DESCRIPTION

In accordance with the principles of the present invention, systems and methods for freezing, thawing and storing biopharmaceutical materials are provided.

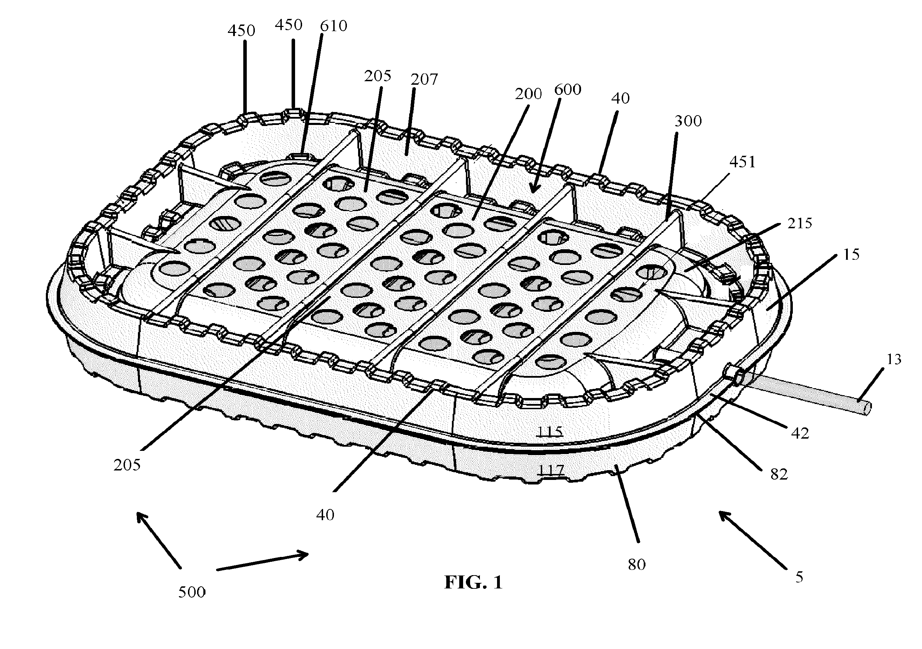

In an exemplary embodiment depicted in FIGS. 1- 6, a system 5 for cooling, freezing, preserving, processing and thawing biopharmaceutical materials is shown. The system may include a sterile container, such as a flexible container 10, configured to contain the biopharmaceutical materials and configured to be supported by a supporting and/or protective structure, such as a holder 15.

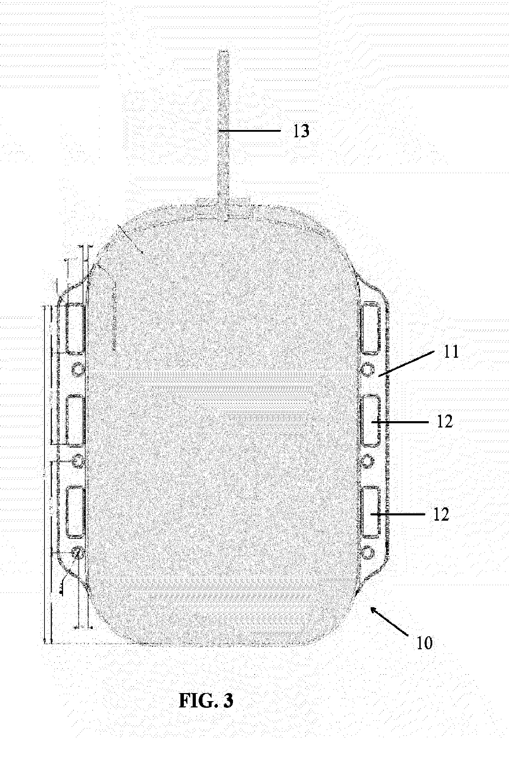

Flexible container 10 may be formed of a laminated film which includes a plurality of layers and may have an interior volume ranging from 0.01-100 liters, (e.g., 0.1-20L) as depicted in FIGS. 3-4 for example. Further, flexible container 10 could be available in a variety of sizes to accommodate different uses, for example, 5-10 liter flexible containers, such as 8-liter containers, may be utilized. Also a biocompatible product-contacting layer of the interior of flexible container 10 may be formed of a low density polyethylene, very low density polyethylene, ethylene vinyl acetate copolymer, polyester, polyamide, polyvinylchloride, polypropylene, polyfluoroethylene, polyvinylidenefluoride, polyurethane or fluoroethylenepropylene, for example. A gas and water vapor barrier layer may also be formed of an ethylene/vinyl alcohol copolymer mixture within a polyamide or an ethylene vinyl acetate copolymer. Further, flexible container 10 may include a layer with high mechanical strength (e.g. a polyamide), and an external layer with insulating effect to heat welding, for example, polyester. The layers may be compatible with warm and cold conditions and may be able to withstand ionizing and gamma irradiation for sterilization purposes. Also, flexible container 10 may have a large surface area to volume ratio, and a relatively thin wall thus promoting heat transfer therethrough when received in a temperature control unit such as an interior 500 of a walk-in or blast freezer (FIG. 1). One example of materials useful for formulation of flexible container 10 is described in U.S. patent No. 5,988,422 to Vallot.

Container 10 may be adapted to receive and contain frozen and/or liquid biopharmaceutical materials. In an embodiment, the biopharmaceutical materials may comprise protein solutions, protein formulations, amino acid solutions, amino acid formulations, peptide solutions, peptide formulations, DNA solutions, DNA formulations, RNA solutions, RNA formulations, nucleic acid solutions, nucleic acid formulations, antibodies and their fragments, enzymes and their fragments, vaccines, viruses and their fragments, biological cell suspensions, biological cell fragment suspensions (including cell organelles, nuclei, inclusion bodies, membrane proteins, and/or membranes), tissue fragments suspensions, cell aggregates suspensions, biological tissues in solution, organs in solution, embryos in solution, cell growth media, serum, biologicals, blood products, preservation solutions, fermentation broths, and cell culture fluids with and without cells, mixtures of the above and biocatalysts and their fragments.

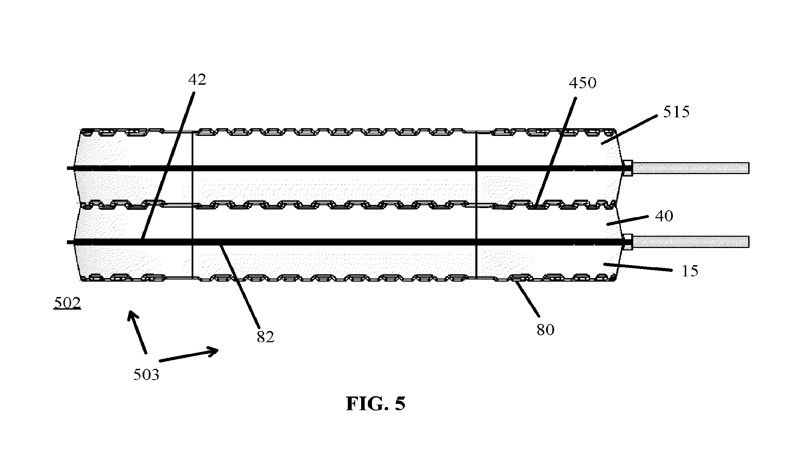

Container 10 is configured (e.g., shaped and dimensioned) to be received in, and connected to holder 15 (FIGS. 1-2 and 4-5), which acts as a protector, supporting structure or frame for supporting flexible container 10. In one example, container 10 may have a pillow-shape. Holder 15 may be configured to protect a container held therein during filling, transport, storage, and/or freezing of biopharmaceutical materials. For example, holder 15 may hold and protect container 10 during freezing of biopharmaceutical materials in interior 500 of a walk-in or blast freezer (FIG. 1). Further, holder 15 may protect container 10 when holder 15 is stacked on or under another holder (e.g., holder 515, (FIG. 5)) similar to holder 15.

For example, holder 15 includes a first portion 115 and a second portion 117 forming a cradle 202 having a cavity 240 when connected to one another. First portion 115 has a bottom 200 and upwardly curving sides 210. Second portion 117 has a bottom 220 and upwardly curving sides 230. Bottom 200, upwardly curving sides 210, bottom 220 and upwardly curving sides 230 form cradle 202 which bounds cavity 240. Container 10 is received in cavity 240 and may be connected to first portion 115 and/or second portion 117. For example, container 10 may be heat sealed or otherwise connected to first portion 115 and/or second portion 117 to prevent or inhibit separation of container 10 therefrom.

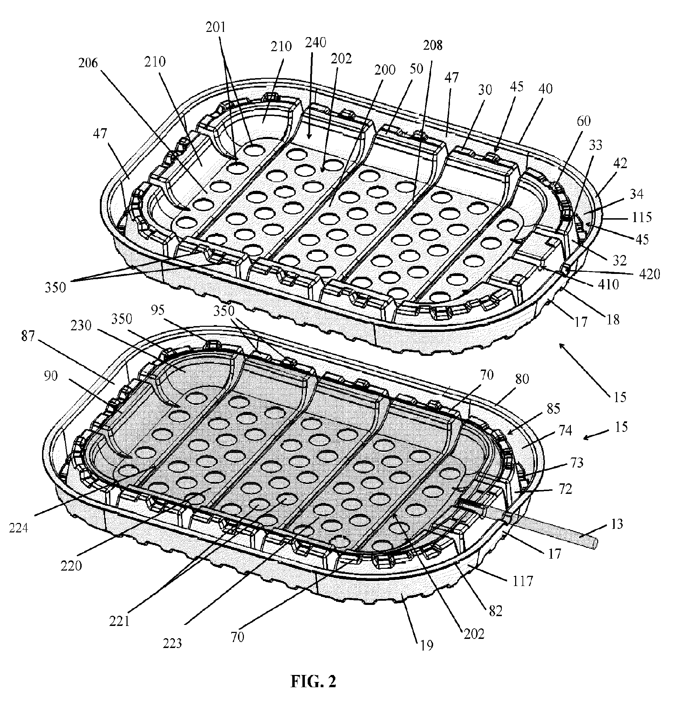

An inner rim 30 of first portion 115 may be connected to an outer rim 40 of first portion 115 as depicted in FIG.2. Inner rim 30 may include a substantially flat holding or clamping portion 50 and a connecting portion 60, both of which may extend partially or entirely around an inner circumference of holder 15. Similarly, an inner rim 70 of second portion 117 may be connected to an outer rim 80. Inner rim 70 may include a substantially flat holding or clamping portion 90 and a connecting portion 95, both of which may extend partially or entirely around an inner circumference of holder 15. Holding or clamping portion 50 and holding or clamping portion 90 may be configured to hold or clamp container 10 therebetween before it is filled with biopharmaceutical materials to center the container in the cradle and cavity 240. For example, holding portion 50 and holding portion 90 may be spaced from each other to provide a particular amount of friction to container 10 such that as container 10 is filled with the biopharmaceutical materials, an edge or portion of the container may move from a position between the holding portions, or external to the holding portions into cavity 240. Thus, as container 10 is filled with biopharmaceutical materials, container 10 may expand in cradle 202 to conform to the inner surfaces (i.e., bottom 200, upwardly curving sides 210, bottom 220 and upwardly curving sides 230) of cradle 202 bounding cavity 240. Also, container 10 may include an external flange 11 on opposite edges thereof configured to be received between holding or clamping portion 50 and holding or clamping portion 90 to hold the container in the cradle thereof. Such flange may be attached, or may be monolithic relative to, an outer circumference of the container and may be formed of the same material thereof.

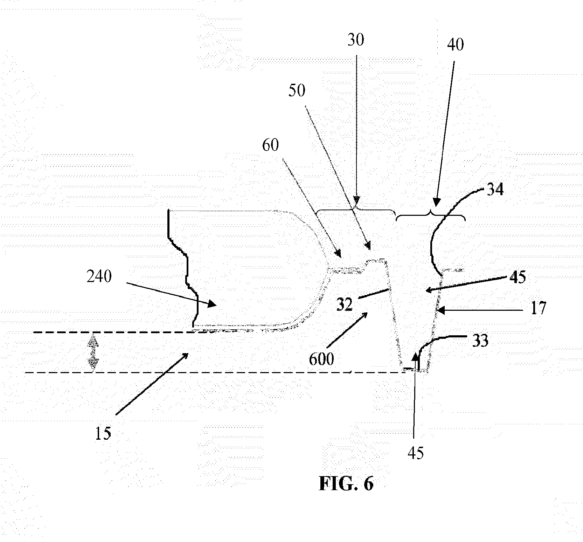

A protective cavity 45 of holder 15 may be bounded by outer rim 40 which is connected to inner rim 30 as depicted in FIGS. 2 and 6. Also, a protective cavity 85 of second portion 117 may be bounded by outer rim 80 which is connected to inner rim 70. Protective cavity 45 and protective cavity 85 may extend circumferentially around holder 15. Outer rim 40 may include an inner wall 32 adjacent inner rim 30, a bottom surface 33 (corresponding to an opposite side of teeth 450) and an outer wall 34. Outer rim 80 may include an inner wall 72 adjacent inner rim 70, a bottom surface 73 and an outer wall 74. The protective cavities (i.e., cavity 45 and cavity 85) allow holder 15 to receive stresses, impacts, or shocks to an outer wall 17 of holder 15 while inhibiting or preventing damage to container 10 held in cavity 240. For example, an impact to outer wall 17 may cause outer wall 17 to temporarily move towards the inner rims into the protective cavities such that the outer walls of the outer rims absorb or dampen the shock and damage to the container is inhibited. Outer wall 17 may include outer wall 34 forming an exterior surface of outer rim 40 of first portion 115 and outer wall 74 forming an exterior surface of outer rim 80 of second portion 117. Outer wall 17 may be formed of an elastically deformable or resilient materials such as PET or HDPE. Further, each of first portion 115 and second portion 117 may be formed monolithically or they may be formed of separate elements connected together. Also, protective cavities 45 and 85 may provides storage for conduits including tubing, connectors and clamps therefor.

First portion 115 and second portion 117 may be connected together via engagement of connecting portion 95 and connecting portion 60. For example, each of connecting portion 60 and connecting portion 95 may include multiple teeth 350 extending upwardly away from bottom 200 and bottom 220, respectively. The teeth on connecting portion 95 and connecting portion 60 may alternate such that they may be inserted into the spaces between opposing teeth to connect (e.g., via interlocking the teeth) first portion 115 to second portion 117. The teeth may alternate continuously around perimeters of connecting portion 95 and connecting portion 60 or clusters of the teeth (e.g., teeth 350) may be intermittent around the perimeters thereof. The interlocking of the teeth of connecting portion 95 and connecting portion 60 may also support a sheer load during an impact or drop to avoid a sheer load being applied to the fasteners or welds connecting first portion 115 and second portion 117 to one another. Container 10 may include openings 12 (e.g., at or near outer edges thereof) to allow teeth to pass therethrough to connect container 10 to holder 15 and to inhibit movement of container 10 relative to holder 15 when the teeth are engaged and clamping portion 50 and connecting surface 90 abut container 10. In one example, the spacing of the teeth or groups of teeth intermittently may allow the connecting portions and/or holding portions (e.g., holding portion 50 and holding portion 90) to hold (e.g., inhibit movement of) the container in the portions of the inner rims between the teeth. In another example, a flange (e.g., flange 11) may be received between connecting portion 95 and connecting portion 60 without teeth 350 thereof passing through the openings (e.g., openings 12) in the container (e.g., container 10).

Bottom 200 and bottom 220 may include a plurality of first openings 201 and a plurality of second openings 221, which may allow heat transfer from an exterior of holder 15 to biopharmaceutical materials held in container 10 in cavity 240 of holder 15. Any number of apertures and any design or placement of the apertures relative to one another on the bottoms may be provided to facilitate such heat transfer while still allowing the bottoms to provide structure/support to a container in cradle 202. Further, the openings may be placed relative to one another and the container may be formed of material such that the container remains offset from the openings (i.e., toward an interior of the cradle) when the biopharmaceutical materials held therein are in a liquid form. The offset of the container's surface from the openings inhibits any potential damage to the container from external hazards which may come near bottom 200 or bottom 220.

Also, bottom 200, bottom 220, sides 210 and sides 230 of cradle 202 may be connected to outer rim 40 by one or more support members or support ribs 300 providing structural support as depicted in FIG. 1, for example. Such ribs may extend across bottom 200 to connect bottom 200 and opposite sides of outer rim 40 to one another. Also, the ribs may extend across bottom 220 to connect opposite sides of outer rim 80 to one another and to bottom 220. Alternatively, one or more of ribs 300 may extend from outer rim 40 to bottom 200 or sides 210 without extending from one side of outer rim 40 to another side thereof. Ribs 300 may be raised relative to an exterior surface 205 of bottom 200 as depicted in FIG.1. An interior side 206 of bottom 200 may also include grooves 208 (FIG. 2) which correspond to ribs 300 on exterior surface 205 of bottom 200. Similarly, ribs 300 may be connected to bottom 220 and sides 230 and/or to opposite sides of outer rim 80 to provide structural support to cradle 202. Also, ribs 300 may be raised relative to an exterior surface (not shown) of bottom 220 while an interior surface 223 may have grooves 224. The connection of support ribs (e.g., ribs 300) to cradle 202 structurally supports the cradle and inhibits deformation of a shape of the cradle in response to expansion of biopharmaceutical materials held in container 10 due to freezing. In another example, holder 15 may not have ribs 300 and instead may be reinforced by rods or cushioned by pads formed of textiles, foam, or other resilient materials.

As indicated above, the container (e.g., container 10) may avoid extending into openings 201 and 221 when biopharmaceutical materials held in the container are in a liquid form. Further, the container may also avoid extending into grooves 208 when such biopharmaceutical materials are in a liquid form. Upon the biopharmaceutical materials undergoing a freezing process, the container and biopharmaceutical materials held therein may extend into grooves 208, openings 201, and openings 221. The movement of freezing biopharmaceutical materials into grooves 208, openings 201, and openings 221 provide locations for expansion of the biopharmaceutical materials thereby allowing for less expansion of bottom 200 and bottom 220 in directions away from one another than would otherwise be the case absent the movement of biopharmaceutical materials into these locations.

Further, a space 600 may extend between exterior surface 205 of bottom 200 and an exterior surface 207 of inner wall 32 of outer rim 40 as depicted in FIGS. 1 and 6. Space 600 may also be bounded by an exterior surface 215 of upwardly extending sides 210 and a bottom 610 of space 600, which may be an exterior surface corresponding clamping portion 50 and connecting surface 90 on the opposite of holder 15. As described above relative to protective cavity 45 and protective cavity 85, the space between outer rim 40 and exterior surface 205 of bottom 200 may provide protection to container 10 held in cradle 202. In particular, an impact, shock or stress to outer rim 40 may cause outer rim 40 (e.g., exterior surface 207) to move into, or deform (e.g., elastically or resiliently) toward space 600 thereby absorbing the impact, shock or stress and inhibiting the impact, shock or stress from being applied to container 10 and the biopharmaceutical materials held therein. Similarly, a space (not shown) may be provided between an exterior surface (not shown) of bottom 220 and outer rim 80 to inhibit damage to container 10 and biopharmaceutical materials held therein.

Outer rim 40 may have a height different than exterior surface 205 of bottom 200 and ribs 300 thereon such that outer rim 40 is raised relative to exterior surface 205 and ribs 300 as depicted in FIG. 1. The difference in height between the outer rim and the exterior surface of the bottom of the holder allows expansion of biopharmaceutical materials held in container 10 in cradle 202 due to freezing while avoiding the exterior side (i.e., exterior surface 205) extending beyond outer rim 40. Similarly, outer rim 80 may have a height different than the exterior surface (not shown) of bottom 220 and ribs 300 thereon such that outer rim 80 is raised relative to the exterior surface and ribs 300 thereby allowing expansion of biopharmaceutical materials held in container 10 in cradle 202 due to freezing while avoiding the exterior side of bottom 220 from extending beyond outer rim 80.

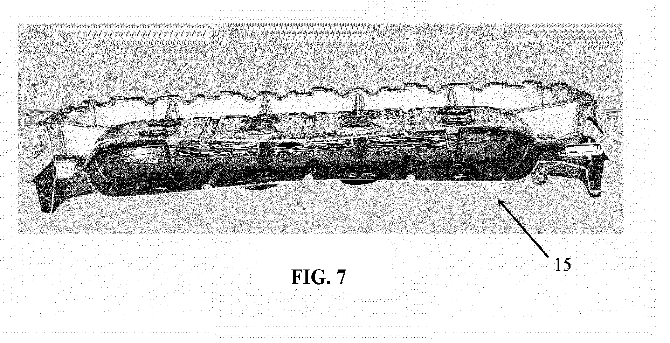

Further, water and aqueous solutions expand by about ten percent when frozen and such expansion may be non-uniform. In one example, when container 10 is received in cradle 202 the container may be filled with biopharmaceuticals such that cradle 202 may accommodate the expansion due to freezing of the biopharmaceutical materials, i.e., the cradle is not filled with biopharmaceutical materials to its volumetric capacity in a liquid state and instead space exists to allow expansion of the biopharmaceutical materials within cradle 202. Also, in another example bottoms 200 and 220 of cradle 202 may curve inwardly toward one another (i.e., the shape thereof may be concave when viewed from an exterior of cradle 212 as depicted in FIG. 7) before freezing of biopharmaceutical materials and the expansion of the biopharmaceutical materials may cause the bottoms to move apart from each other such that they are substantially flat on outer surfaces (e.g., exterior surface 205) thereof.

Further, the difference in height between each of the outer rims and the exterior surfaces of the bottoms of the holder (i.e., even after freezing of the biopharmaceutical materials) inhibits damage to the biopharmaceutical materials held in container 10, along with container 10 itself. In particular, the bottoms (e.g., bottoms 200 and 220) of the holder may not contact any objects adjacent to holder 15 or abutting holder 15 resulting from such objects instead contacting the outer rim(s), as depicted in FIG. 5. For example, when holder 15 lies horizontally on a surface 502 of an interior (e.g., an interior 502) of a blast freezer, outer rim 80 may contact the surface and outer rim 40 may contact an object (e.g., a holder 515) stacked on top of holder 15, but neither bottom 200 nor bottom 220 may contact the surface or the object due to the space between the exterior surface (e.g., exterior surface 205) of the bottoms and any object resulting from the difference in height between the outer rims and the exterior surfaces of the bottoms.

The outer rims (e.g., outer rim 40 and outer rim 80) may also have teeth 450 (FIG. 1) to allow holder 15 to be connected (i.e., by interlocking the teeth) to a second similar holder, such as holder 515, having complementary teeth on an outer rim thereof as depicted in FIG. 5. The difference in height between the outer rims and exterior surfaces also allows the stacking of multiple holders (e.g., holder 15 and holder 515) on the outer rims thereof and the engagement of the corresponding teeth in contrast to stacking the exterior surfaces (e.g., exterior surface 205) on each other. For example, the difference in heights between the outer rims and exterior surfaces is advantageous particularly when such exterior surfaces (e.g., exterior surface 205) may be deformed (e.g., by a mounding effect) due to the expansion of freezing biopharmaceutical materials held in containers therein thereby making stacking difficult. In this case, the stacking of the holders on the outer rims minimizes any interference that may be caused by deformation of the exterior surfaces. More particularly, the height difference between the rims and the exterior surfaces allow the expansion of the biopharmaceutical materials held in container 10 in cradle 202 toward an outer surface of the outer rim (e.g., outer rims 40 and 80) while avoiding the exterior surfaces from extending beyond the outer surfaces of the outer rims. The expansion of the exterior surface beyond the outer rims may otherwise (i.e., absent the raised height of the rims relative to the exterior surfaces) inhibit the stacking of another holder on top of holder 15 due to the uneven surfaces provided by the expansion of the biopharmaceuticals held in container 10.

Outer rim 40 may include a bottom end 42 and outer rim 80 may include a top end 82, which may be connected to one another via heat sealing, or some other means of fixedly and/or sealingly connecting the outer rims to one another as depicted in FIGS. 1, 2 and 4. For example, flanges (not shown) may also be provided which extend outwardly from outer rims 40 and 80 to allow first portion 115 and second portion 117 to be mechanically fastened to each other using fasteners, such as pop rivets, ratcheting fasteners, other fasteners, screws or bolts. Also, such connection may be done by welding (e.g., heat sealing, high frequency sealing or ultra sonic welding) or with adhesive. Such a connection may inhibit contamination from passing by outer rim 40 and outer rim 80 toward container 10.

The outer rims (e.g., outer rim 40 and outer rim 80) and the inner rims (e.g., inner rim 30 and inner rim 70) may include apertures such as a first aperture 420 and a second aperture 410 depicted in FIG. 2. to allow conduits (e.g., a conduit 13) connected to container 10 to pass therethrough. Such conduits may allow filling or draining of biopharmaceutical materials or other solids, liquids, or gases into and/or out of the interior (not shown) of container 10. Conduit 13 may also be used to insert a measurement probe (not shown) inside container 10 (e.g., a pH electrode, a conductivity sensor, temperature probe, an ion selective electrode, a spectophotometric probe, an ultrasound sensor, an optic fiber.)

Conduit 13 may be integral (e.g., monolithic relative) to container 10 or it may be connectable to a receiving port (not shown) thereof. For example, conduit 13 could be connected to a receiving port using a fitting placed within the inlet port. Fittings such as those described in U.S. Patent No. 6,186,932, may be used for the connection of such conduits. Also, fittings which can maintain the sterility of the contents of the container or flexible container may preferably be used. The fittings may be configured in different shapes, such as straight fittings and/or angled fittings including ninety (90) degree elbows, if desired. In another example, conduit 13 may include a filter (not shown) to filter any impurities or other undesirable materials from the biopharmaceutical material. The conduit and/or fittings may be located in protective cavity 45 and/or protective cavity 85, which may protect conduit 13 and the fittings from any damage resulting from impact or stress, such as the impact resulting from a person dropping holder 15 when container 10 is filled with biopharmaceutical materials.

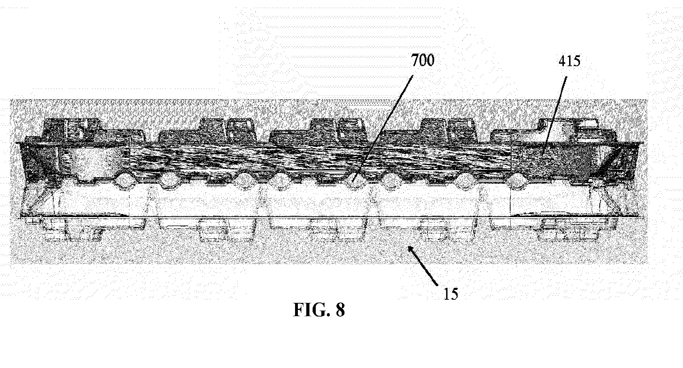

In another example depicted in FIG. 8, the outer rims (e.g., outer rim 40 and outer rim 80) may also have spaces 700 (FIG. 8) that form channels when holder 15 is connected (i.e., by interlocking teeth 450) to a second similar holder, such as a holder 415, having complementary teeth and spaces on an outer rim thereof as depicted in FIG. 8. Spaces 700 may allow heat transfer from an exterior of holder 15 to the exterior surface of a bottom 200 and a bottom 220 of the holder 15 and to the biopharmaceutical materials held in container 10 in cavity 240 of holder 15. Any number of spaces or channels and any design or placement of the spaces or channels relative to one another may be provided to facilitate such heat transfer. Hanging holes (not shown) may be located on inner rim 30 or outer rim 40 of first portion 115 and on matching locations on inner rim 70 or on outer rim 80 of second portion 117.. Such hanging holes allow a hanger (not shown) to be inserted therein to allow holder 15 to be suspended from such hanger. Biopharmaceutical materials held in container 10 may then be drained through a conduit, such as conduit 13.

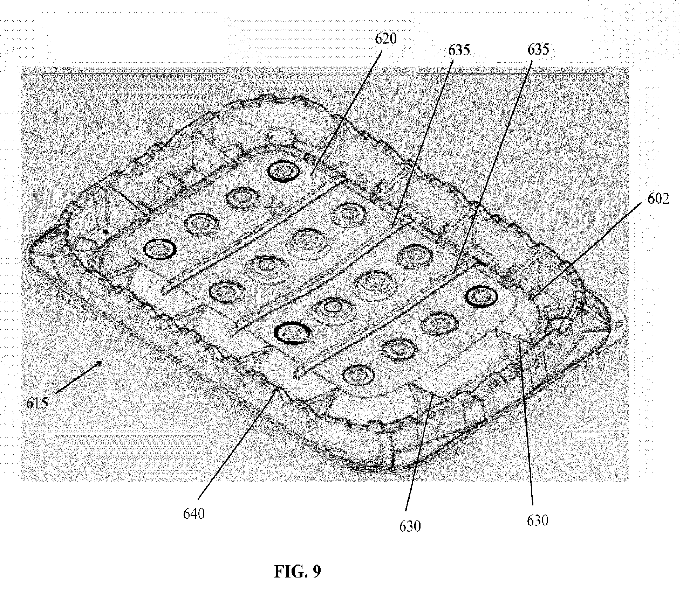

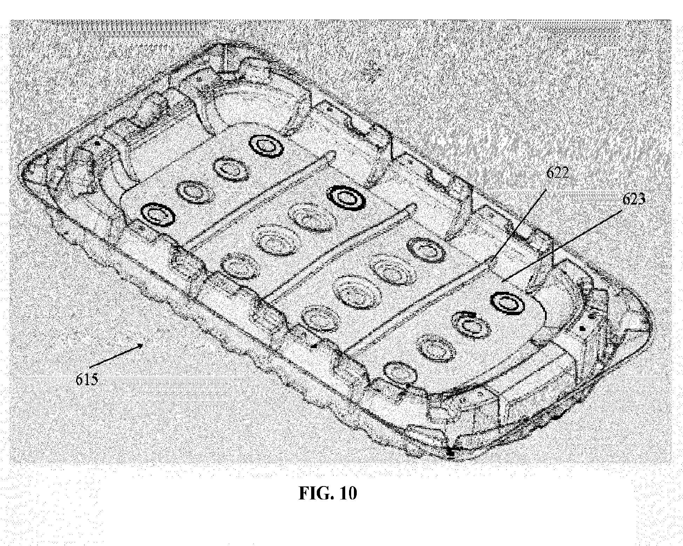

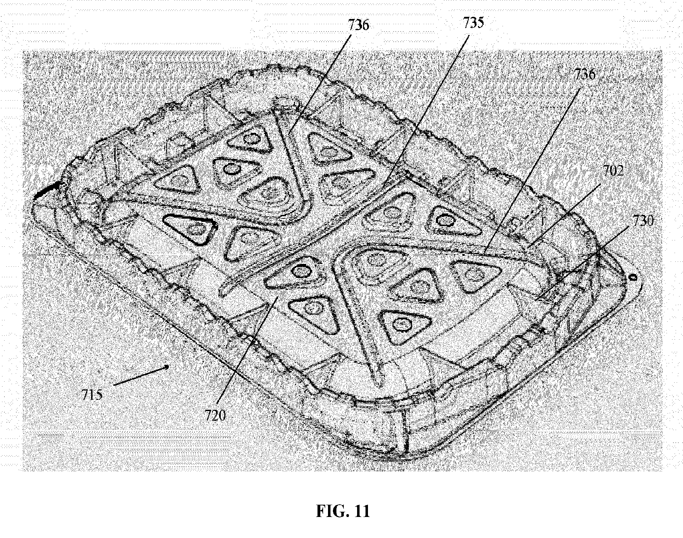

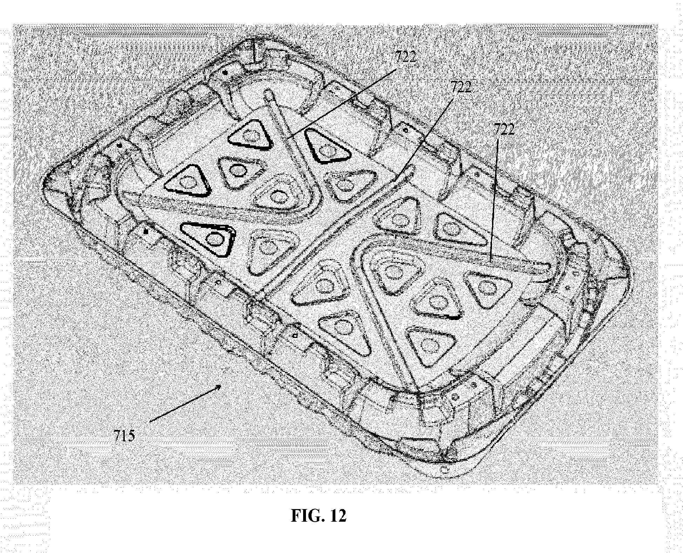

In another example depicted in FIGS. 9-10, a holder 615 includes a plurality of connecting ribs 630 and a plurality of transverse ribs 635. Connecting ribs 630 connect an outer rim 640 to a cradle 602, which is similar to that described for holder 15. Further, transverse rib 635 extend transversely relative to a longitudinal dimension of a bottom 620 of cradle 602 and from one side of the cradle to an opposite side thereof. Grooves 622 are located on an opposite surface 623 of bottom 620 and the grooves correspond to transverse ribs 635. The bottom may be concave inwardly as viewed from outside cradle 602, as described above for holder 15 depicted in FIG. 7. Ribs 630 and transverse ribs 635 provide support for cradle 602 to inhibit deformation of bottom 620 away from cradle 602 in response to the freezing of biopharmaceutical materials held in cradle 602. In a further example depicted in FIGS. 11-12, a holder 715 includes connecting ribs 730, a transverse rib 735, and opposite curving ribs 736 which extend from opposite ends of a cradle 602 toward transverse rib 735 and curve back toward the end from which they started. As it is understood by one skilled in the art, support ribs may extend in various directions on a cradle, such as cradle 602 or cradle 702, to provide structural support to a cradle in response to biopharmaceutical materials freezing which are held in such a cradle. As depicted in FIG. 12, grooves 722 correspond to the ribs on an opposite side of a bottom 720 such that the grooves are indentations and the ribs are protrusions from opposite sides of bottom 720.

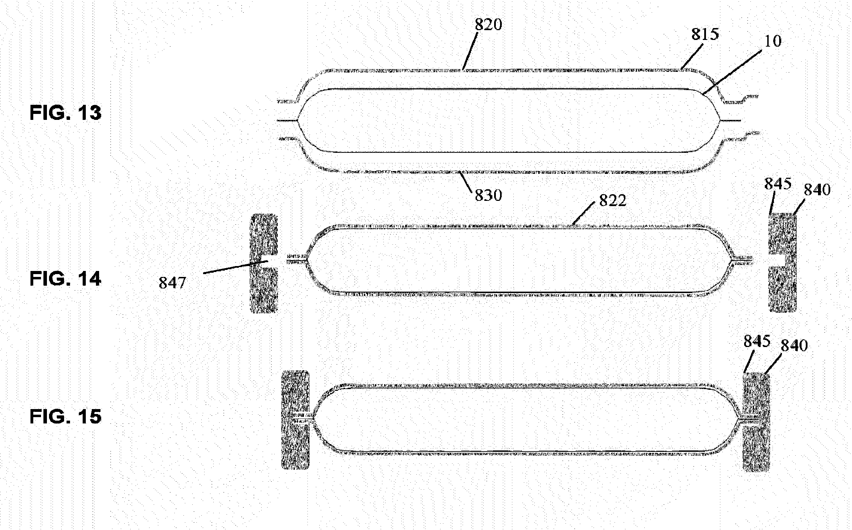

In another example depicted in FIGS. 13-15, a holder 815 may receive container 10 and may include a first portion 820 and a second portion 830 which may be connectable to a protective member 840 which may completely or partially surround first portion 820 and second portion 830. Protective member 840 may be formed of a resilient material (e.g., PET or HDPE) configured to absorb stresses or shocks thereon. Protective member 840 may be connected to first portion 820 and second portion 830 via a friction fit, for example. Alternatively, ends 825 of first portion 820 and second portion 830 may be received in a groove 847 of multiple portions of member 840. Such multiple portions of protective member 840 may then be welded or otherwise connected to one another. As depicted, an exterior surface 822 of first portion 820 may be recessed relative to a top surface 845 of member 840. The recessed location of exterior surface 822 may inhibit damage to container 10 held therein as described above relative to holder 15.

Also, the holders (e.g., holder 15) may preferably be formed of materials configured to support a weight of container 10 and to protect container 10 from being punctured or damaged due to an impact or stress on holder 15. For example, holder 15 may be more rigid than container 10 held therein. Also, the materials forming holder 15 may remain stable and retain their structural properties over a large range of temperatures. Specifically, such materials should retain their load-bearing capacity and exhibit cold crack temperatures no higher than negative 80 degrees Celsius while being resistant to cleaning agents and methods commonly used in biopharmaceutical manufacturing, e.g., sodium hydroxide, sodium hypochloride (e.g., CLOROX), peracetic acid, etc. For example, first portion 115 and second portion 117 of holder 15 could be formed of injection molded plastic or thermo formed plastic, such as PET (e.g., Clear 0.05" PET) or HDPE (e.g., 0.080" black unfilled HDPE). Also, holder 15 may be formed of fluoropolymer resin (e.g. TEFLON), machined plastic, stainless steel or any number of other materials including aluminum, polyethylene, polypropylene, polycarbonate, and polysulfone, for example. Further materials may include composite materials such as glass-reinforced plastic, carbon-fiber reinforced resins, or other engineering plastic materials known to offer high strength-to-weight rations and which are serviceable at various temperatures of interest. It will be understood by those skilled in the art that each of first portion 115 and second portion 117 may be monolithic and formed as one piece or may include elements fixedly connected together. In addition, portions 115 and 117 may be constructed as one piece such that the portions 115, 117 may be hinged or otherwise connected together. Further, holder 15 could be formed of a single material (e.g., injection molded plastic) or it could be formed of different materials and connected together. Also, holder 15 may be formed of a material compatible with gamma radiation.

Also, a holder (e.g., holder 15) may be formed, sized and/or dimensioned to receive and support containers of various sizes to provide additional rigidity and support to the container(s), thus facilitating handling, storage, and/or temperature control thereof. For example, container 10 may be pillow shaped and holder 15 may be elliptically shaped.

Also, it will be understood by one skilled in the art that various holders (e.g., holder 15) may have cradles (e.g., cradle 202) configured (e.g., shaped and dimensioned) to receive various sized containers (e.g., container 10) and to be received in a temperature control unit (e .g., a blast freezer). Although the containers are described herein as flexible containers, the containers may be made of a semi-rigid material such as polyethylene or the like. An example of such a container could include a container similar to a standard plastic milk jug. Containers made of such similar semi-rigid materials may benefit from additional rigidity supplied by attachment (e.g., fixedly or releasably) to a holder, for example. Further, the containers whether formed of a rigid, flexible or semi-rigid material, contain outer surfaces which may contact the interior surfaces of a holder which may include holes and/or may be formed of a material to facilitate heat transfer to and from a container (e.g., container 10) held in such a holder (e.g., holder 15) when the holder is present in a temperature control unit, such as a blast freezer. Further, the outer surfaces of the holder receiving the containers for holding the biopharmaceutical materials may be in contact with air flow in an interior (e.g., interior 500) of a blast freezer or other means of temperature control to cause the cooling and/or heating of the container having the biopharmaceutical materials therein to cause the temperature of the biopharmaceutical materials to be controlled.

In another example, holder 15 may be formed of a foam (e.g., HDPE, EVA), or a more rigid material (e.g., foam or solid) may be utilized with such a foam to form the holder. Also, a container, such as container 10, may be connected to a holder, such as holder 15, by RF welding. In a further example, a container and holder may be separated from one another within cradle 202 by a layer of collapsible dimples (not shown) or ribs (not shown).

The biopharmaceutical material in the containers (i.e., container 10) and holders (e.g., holder 15) described above may thus be cooled or otherwise thermoregulated (e.g., to a subzero temperature) in a temperature control unit, such as a blast freezer providing forced convection, for example. Alternatively, the biopharmaceutical materials may be frozen in a conventional laboratory freezer providing free convention, a plate freezer or via a liquid nitrogen path. When such freezing operation is completed, the containers may be removed from the temperature control unit by removing the containers and the holders, or other support structures which the containers are received in or connected to, for example. The holders or other support structures holding the containers may be stored in a large chiller or freezer with an interior air temperature of about negative 20 degrees Celsius, for example.

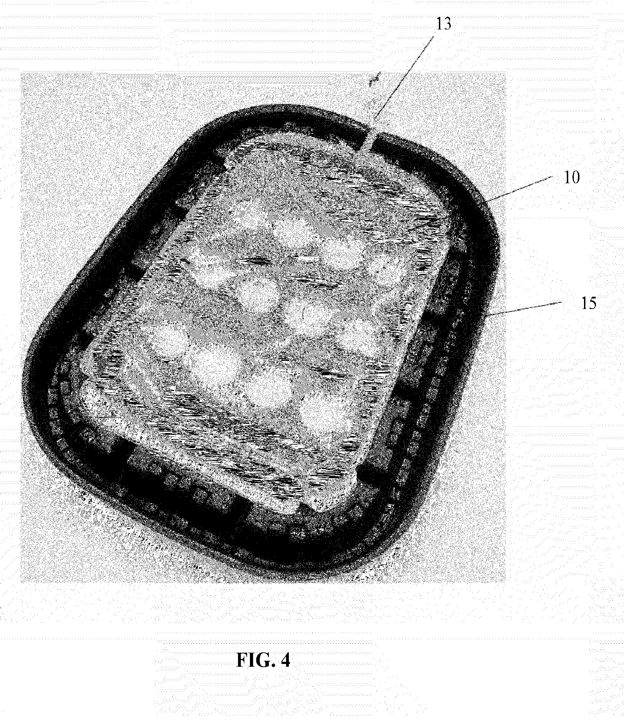

A typical process for processing and/or preserving a biopharmaceutical material is described as follows. One or more containers (e.g., container 10) is received in and/or connected to a holder (e.g., holders 15, 515) as depicted in FIG. 4. Also, holder 15 may be aligned substantially horizontally (e.g., as depicted in FIGS. 1 and 5) and biopharmaceutical material, for example liquid biopharmaceutical material, may be inserted through conduit 13 into container 10. Also, after biopharmaceutical material is received in the interior of the holder (e.g., holders 15, 515) through a conduit (e.g., conduit 13). Holder 15 may be located in a temperature control unit, such as an interior 500 of a blast freezer, as shown in FIG. 1. The biopharmaceutical contents are frozen in the temperature control to negative 20 degrees Celsius or below, for example. After the biopharmaceutical material in the container(s) is frozen, holder 15 and the container(s) may be stored in the temperature control unit, such as a blast freezer, or removed therefrom and placed in a large freezer, for example, a walk-in freezer having an interior air temperature of about negative 20 degrees Celsius for storage, as is typically present in large medical institutions (e.g., hospitals). Also, the use of containers (e.g., container 10) having a uniform thickness allow uniform cooling to occur within such a temperature control unit, blast freezer, or other means for controlling a temperature of the immediate surroundings of such containers.

Further, the above-described containers may be removed from a freezer or other system for storage of the flexible containers and contents thereof at a controlled temperature. These containers having biopharmaceutical material therein may then be received in a temperature control unit (e.g., an interior 500 of a blast freezer) for heating, melting, agitating, mixing and/or thawing the biopharmaceutical material contained in the containers. For example, holder 15 supporting container 10 having frozen biopharmaceutical material therein may be placed in a temperature control unit where its temperature may be controlled (e.g. thawed) by heat transfer plates or air convection (e.g., free or forced air) heating. Also, the biopharmaceutical materials may be thawed in a water bath or in air and ambient temperature. In another example, a thin film heater, such as self-regulating positive temperature coefficient (PTC) heater element, may be incorporated into holder 15 to allow a container held therein to be thawed at a predefined setpoint using only an external voltage source. In addition, holder 15 may be submitted to gentle mixing inside a temperature control unit to accelerate the thawing kinetics and to minimize any solute concentration gradient in the thawed liquid.

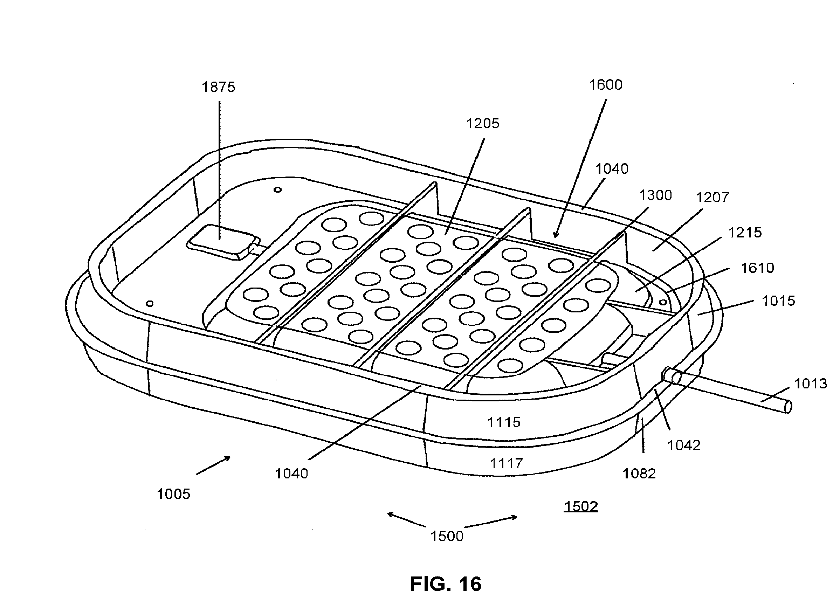

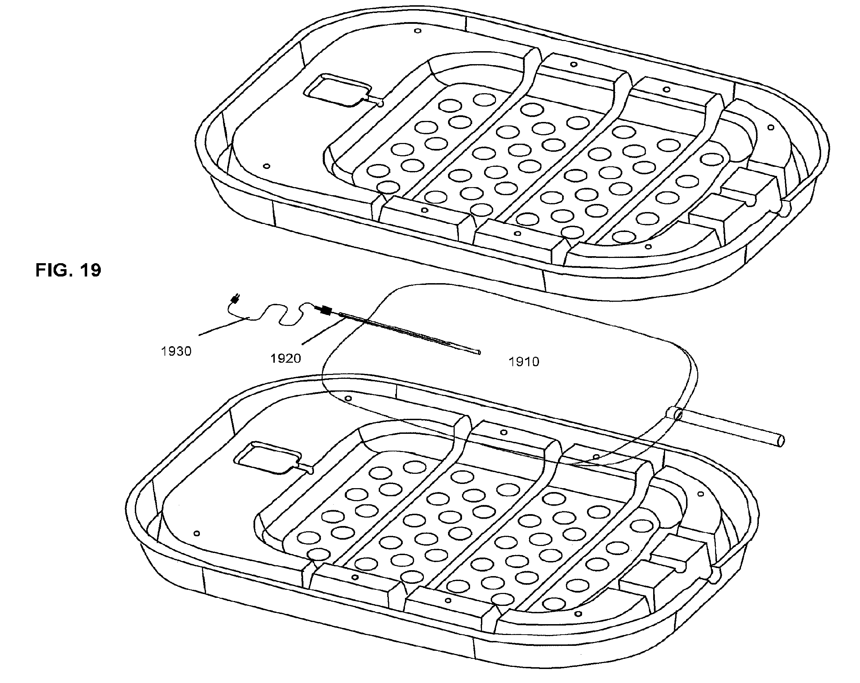

In another embodiment depicted in FIGS. 16-19, a system 1005 for cooling, freezing, preserving, processing and thawing biopharmaceutical materials is shown. The system may include a sterile container, such as a flexible container 1010, configured to contain the biopharmaceutical materials and configured to be supported by a supporting and/or protective structure, such as a holder 1015.

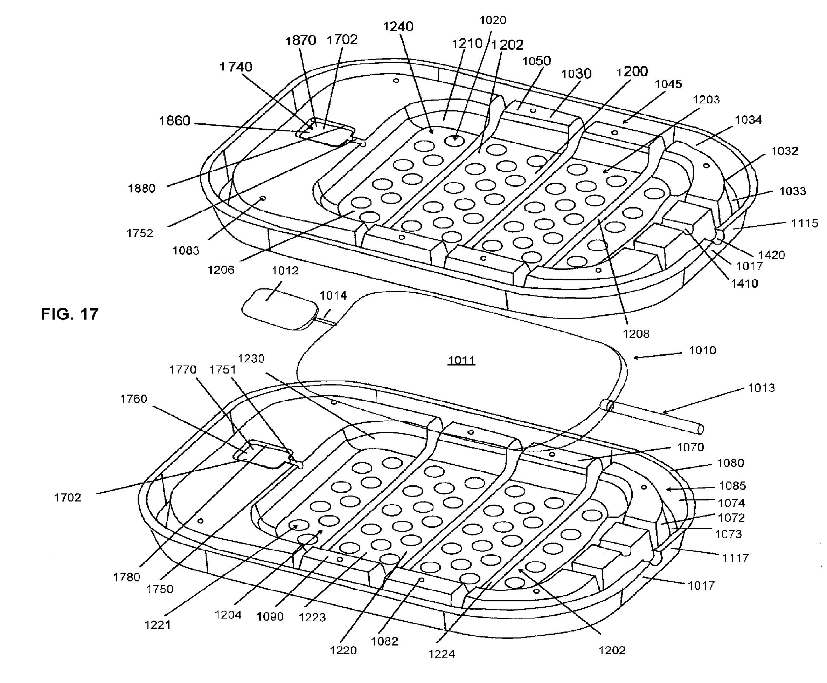

Flexible container 1010 may be formed of a laminated film which includes a plurality of layers and may have an interior volume ranging from 0.01-100 liters, (e.g., 0.1-20L) as depicted in FIG. 17 for example. Further, flexible container 1010 could be available in a variety of sizes to accommodate different uses, for example, 1005-1010 liter flexible containers, such as 8-liter containers, may be utilized. Also a biocompatible product-contacting layer of the interior of flexible container 1010 may be formed of a low density polyethylene, very low density polyethylene, ethylene vinyl acetate copolymer, polyester, polyamide, polyvinylchloride, polypropylene, polyfluoroethylene, polyvinylidenefluoride, polyurethane or fluoroethylenepropylene, for example. A gas and water vapor barrier layer may also be formed of an ethylene/vinyl alcohol copolymer mixture within a polyamide or an ethylene vinyl acetate copolymer. Further, flexible container 1010 may include a layer with high mechanical strength (e.g. a polyamide), and an external layer with insulating effect to heat welding, for example, polyester. The layers may be compatible with warm and cold conditions and may be able to withstand ionizing and gamma irradiation for sterilization purposes. Also, flexible container 1010 may have a large surface area to volume ratio, and a relatively thin wall thus promoting heat transfer therethrough when received in a temperature control unit such as an interior 1500 of a walk-in or blast freezer (FIG. 16). One example of materials useful for formulation of flexible container 1010 is described in U.S. patent No. 5,988,422 to Vallot.

Container 1010 may be adapted to receive and contain frozen and/or liquid biopharmaceutical materials. In an embodiment, the biopharmaceutical materials may comprise protein solutions, protein formulations, amino acid solutions, amino acid formulations, peptide solutions, peptide formulations, DNA solutions, DNA formulations, RNA solutions, RNA formulations, nucleic acid solutions, nucleic acid formulations, antibodies and their fragments, enzymes and their fragments, vaccines, viruses and their fragments, biological cell suspensions, biological cell fragment suspensions (including cell organelles, nuclei, inclusion bodies, membrane proteins, and/or membranes), tissue fragments suspensions, cell aggregates suspensions, biological tissues in solution, organs in solution, embryos in solution, cell growth media, serum, biologicals, blood products, preservation solutions, fermentation broths, and cell culture fluids with and without cells, mixtures of the above and biocatalysts and their fragments.

Container 1010 may be configured (e.g., shaped and dimensioned) to be received in, and connected to holder 1015, which acts as a protector, supporting structure or frame for supporting flexible container 1010, as depicted in FIGS. 16-17. In one example, container 1010 may have a pillow-shape. Holder 1015 may be configured to protect a container held therein during filling, transport, storage, and/or freezing of biopharmaceutical materials. For example, holder 1015 may hold and protect container 1010 during freezing of biopharmaceutical materials in interior 1500 of a walk-in or blast freezer (FIG. 16). Further, holder 1015 may protect container 1010 when holder 1015 is stacked on or under another holder similar to holder 1015.

For example, holder 1015 may include a first holder portion 1115 and a second holder portion 1117 forming a storage cradle 1202 having a storage cavity 1240 when connected to one another. First portion 1115 has a first storage portion 1203 having a bottom 1200 and upwardly curving sides 1210. Second portion 1117 has a second storage portion 1204 having a bottom 1220 and upwardly curving sides 1230. Bottom 1200, upwardly curving sides 1210, bottom 1220 and upwardly curving sides 1230 form storage cradle 1202 which bounds storage cavity 1240.

First portion 1115 and second portion 1117 may also form a sample cradle 1702 having a sample cavity 1740 when connected to one another. Sample cavity 1740 may be connected to storage cavity 1240 via a connecting portion 1750 defined by a first half 1751 and a second half 1752, which may form a cylinder, for example, when first portion 1115 and second portion 1117 are connected to each other.

First portion 1115 has a first sample portion 1860 having a bottom 1870 and upwardly curving sides 1880. Second portion 1117 has a second sample portion 1760 having a bottom 1770 and upwardly curving sides 1780. Bottom 1770, upwardly curving sides 1780, bottom 1870 and upwardly curving sides 1880 form sample cradle 1702 which bounds sample cavity 1740.

Container 1010 may include a storage portion 1011 and a sample portion 1012 connected by a connecting portion 1014 which may be substantially cylindrical. Storage portion 1011 may be received in storage cavity 1240 and sample portion 1012 may be received in sample cavity 1740 while connecting portion 1014 is received in connecting portion 1750. Storage portion 1011, sample portion 1012 and/or connecting portion 1014 may be connected to first holder portion 1115 and/or second holder portion 1117. For example, container 1010 may be heat sealed or otherwise connected to first portion 1115 and/or second portion 1117 to prevent or inhibit separation of container 1010 therefrom.

Storage portion 1011, sample portion 1012 and/or connecting portion 1014 may be filled with biopharmaceutical materials. Storage portion 1011 and sample portion 1012 may be sealed relative to one another (e.g., in a portion of connecting portion 1014) after such filling such that sample portion 1012 may be disconnected from storage portion 1012 and removed from holder 1015 to allow the biopharmaceutical materials held in sample portion 1012 to be tested, analyzed or otherwise processed while biopharmaceutical materials remain sealed in storage portion 1011 in holder 1015. The separation of storage portion 1011 and sample portion 1012 therefore allows analysis of the biopharmaceutical materials in the sample portion without requiring that the storage portion be opened, thawed or otherwise disturbed. Such separate analysis of the smaller amount of biopharmaceutical materials in the sample portion allows one to be reassured of the quality or other characteristic of the biopharmaceutical materials held in the storage portion without requiring the disturbance of the seal for such storage portion. Because the biopharmaceutical materials were originally inserted into both the sample and storage portions at the same time and the handling (e.g., exposure thereof to freezing, processing and/or other environmental factors) within holder 1015 are substantially the same, one can be assured that the quality and other characteristics within the sample portion and the storage portion are substantially the same.

An inner rim 1030 of first portion 1115 may be connected to an outer rim 1040 of first portion 1115 as depicted in FIG. 17. Inner rim 1030 may include a substantially flat holding or clamping portion 1050 which may extend partially or entirely around an inner circumference of holder 1015. Similarly, an inner rim 1070 of second portion 1117 may be connected to an outer rim 1080. Inner rim 1070 may include a substantially flat holding or clamping portion 1090 which may extend partially or entirely around an inner circumference of holder 1015. The holding or clamping portions may also include a plurality of openings spaced around a circumference thereof. These openings may receive pins to connect first portion 1115 to second portion 1117. For example, first portion 1115 may receive pins (not shown) in openings 1083 which may then be received in openings 1082 of second portion 1117 when the first and second portions are connected to each other. In another example, first portion 1115 and second portion 1117 could include connecting portions such as those described (e.g., teeth 1350) in co-owned U.S. Application Serial No. 11/963,106.

Holding or clamping portion 1050 and holding or clamping portion 1090 may be configured to hold or clamp container 1010 therebetween before it is filled with biopharmaceutical materials to center the container in cradle 1202 and cavity 1240. For example, holding portion 1050 and holding portion 1090 may be spaced from each other to provide a particular amount of friction to container 1010 such that as container 1010 is filled with the biopharmaceutical materials, an edge or portion of the container may move from a position between the holding portions, or external to the holding portions, into cavity 1240. Thus, as container 1010 is filled with biopharmaceutical materials, container 1010 may expand in storage cradle 1202 to conform to the inner surfaces (i.e., bottom 1200, upwardly curving sides 1210, bottom 1220 and upwardly curving sides 1230) of storage cradle 1202 bounding storage cavity 1240 and the inner surfaces (e.g., bottom 1770, upwardly curving sides 1780, bottom 1870 and upwardly curving sides 1880) of sample cradle 1702 bounding sample cavity 1740.

A protective cavity 1045 of holder 1015 may be bounded by outer rim 1040 which is connected to inner rim 1030 as depicted in FIGS. 16-17. Also, a protective cavity 1085 of second portion 1117 may be bounded by outer rim 1080 which is connected to inner rim 1070. Protective cavity 1045 and protective cavity 1085 may extend circumferentially around holder 1015. Outer rim 1040 may include an inner wall 1032 adjacent inner rim 1030, a bottom surface 33 and an outer wall 1034. Outer rim 1080 may include an inner wall 1072 adjacent inner rim 1070, a bottom surface 1073 and an outer wall 1074. The protective cavities (i.e., cavity 1045 and cavity 1085) allow holder 1015 to receive stresses, impacts, or shocks to an outer wall 1017 of holder 1015 while inhibiting or preventing damage to container 1010 held in cavity 1240. For example, an impact to outer wall 1017 may cause outer wall 1017 to temporarily move towards the inner rims into the protective cavities such that the outer walls of the outer rims absorb or dampen the shock and damage to the container is inhibited. Outer wall 1017 may include outer wall 1034 forming an exterior surface of outer rim 1040 of first portion 1115 and outer wall 1074 forming an exterior surface of outer rim 1080 of second portion 1117. Outer wall 1017 may be formed of elastically deformable or resilient materials such as PET or HDPE. Further, each of first portion 1115 and second portion 1117 may be formed monolithically or they may be formed of separate elements connected together. Also, protective cavities 1045 and 1085 may provides storage for conduits including tubing, connectors and clamps therefor.

Bottom 1200 and bottom 1220 may include a plurality of first openings 1201 and a plurality of second openings 1221, which may allow heat transfer from an exterior of holder 1015 to biopharmaceutical materials held in container 1010 in cavity 1240 of holder 1015. Any number of apertures and any design or placement of the apertures relative to one another on the bottoms may be provided to facilitate such heat transfer while still allowing the bottoms to provide structure/support to a container in cradle 1202. Further, the openings may be placed relative to one another and the container may be formed of material such that the container remains offset from the openings (i.e., toward an interior of the cradle) when the biopharmaceutical materials held therein are in a liquid form. The offset of the container's surface from the openings inhibits any potential damage to the container from external hazards which may come near bottom 1200 or bottom 1220. Bottom 1770 and 1780 could also include such openings to facilitate heat transfer.

Also, bottom 1200, bottom 1220, sides 1210 and sides 1230 of cradle 1202 may be connected to outer rim 1040 by one or more support members or support ribs 1300 providing structural support as depicted in FIG. 16, for example. Such ribs may extend across bottom 1200 to connect bottom 1200 and opposite sides of outer rim 1040 to one another. Also, the ribs may extend across bottom 1220 to connect opposite sides of outer rim 1080 to one another and to bottom 1220. Alternatively, one or more of ribs 1300 may extend from outer rim 1040 to bottom 1200 or sides 1210 without extending from one side of outer rim 1040 to another side thereof. Ribs 1300 may be raised relative to an exterior surface 205 of bottom 1200 and an external surface 1875 of bottom 1870 as depicted in FIG. 16. An interior side 1206 of bottom 1200 may also include grooves 1208 (FIG. 17) which correspond to ribs 1300 on exterior surface 1205 of bottom 1200. Similarly, ribs 1300 may be connected to bottom 1220 and sides 1230 and/or to opposite sides of outer rim 1080 to provide structural support to cradle 1202. Also, ribs 1300 may be raised relative to an exterior surface (not shown) of bottom 1220 while an interior surface 1223 may have grooves 1224. Ribs 1300 may also be raised relative to an exterior surface 1775 of bottom 1770. The connection of support ribs (e.g., ribs 1300) to cradle 1202 structurally supports the cradle and inhibits deformation of a shape of the cradle in response to expansion of biopharmaceutical materials held in container 1010 due to freezing. In another example, holder 1015 may not have ribs 1300 and instead may be reinforced by rods or cushioned by pads formed of textiles, foam, or other resilient materials.

As indicated above, the container (e.g., container 1010) may avoid extending into openings 1201 and 1221 (or other openings if present in cradle 1702) when biopharmaceutical materials held in the container are in a liquid form. Further, the container may also avoid extending into grooves 1208 when such biopharmaceutical materials are in a liquid form. Upon the biopharmaceutical materials undergoing a freezing process, the container and biopharmaceutical materials held therein may extend into grooves 1208, openings 1201, and openings 1221. The movement of freezing biopharmaceutical materials into grooves 1208, openings 1201, and openings 1221 provide locations for expansion of the biopharmaceutical materials thereby allowing for less expansion of bottom 1200 and bottom 1220 in directions away from one another than would otherwise be the case absent the movement of biopharmaceutical materials into these locations.

Further, a space 1600 may extend between exterior surface 1205 of bottom 1200 and an exterior surface 1207 of inner wall 1032 of outer rim 1040 as depicted in FIG. 16. Space 1600 may also be bounded by an exterior surface 1215 of upwardly extending sides 1210 and a bottom 1610 of space 1600, which may be an exterior surface of corresponding clamping portion 1050 and connecting surface 1090 on the opposite side of holder 1015. As described above relative to protective cavity 1045 and protective cavity 1085, the space between outer rim 1040 and exterior surface 1205 of bottom 1200 may provide protection to container 1010 held in cradle 1202. In particular, an impact, shock or stress to outer rim 1040 may cause outer rim 1040 (e.g., exterior surface 1207) to move into, or deform (e.g., elastically or resiliently) toward space 1600 thereby absorbing the impact, shock or stress and inhibiting the impact, shock or stress from being applied to container 1010 and the biopharmaceutical materials held therein. Similarly, a space (not shown) may be provided between an exterior surface (not shown) of bottom 1220 and outer rim 1080 to inhibit damage to container 1010 and biopharmaceutical materials held therein.

Outer rim 1040 may have a height different than exterior surface 1205 of bottom 1200 and an external surface 1875 of bottom 1870 and ribs 1300 thereon such that outer rim 1040 is raised relative to exterior surface 1205, exterior surface 1875 and ribs 1300 as depicted in FIG. 16. The difference in height between the outer rim and the exterior surfaces of the bottoms of the holder allows expansion of biopharmaceutical materials held in container 1010 in cradle 1202 due to freezing while avoiding the exterior side (i.e., exterior surface 1205 and exterior surface 1875) extending beyond outer rim 1040. Similarly, outer rim 1080 may have a height different than the exterior surface (not shown) of bottom 1220, bottom 1770 and ribs 1300 thereon such that outer rim 1080 is raised relative to the exterior surface and ribs 1300 thereby allowing expansion of biopharmaceutical materials held in container 1010 in cradle 1202 due to freezing while avoiding the exterior side of bottom 1220 from extending beyond outer rim 1080.

Further, water and aqueous solutions expand by about ten percent when frozen and such expansion may be non-uniform. In one example, when container 1010 is received in cradle 1202 and cradle 1702 the container may be filled with biopharmaceuticals such that cradle 1202 and cradle 1702 may accommodate the expansion due to freezing of the biopharmaceutical materials, i.e., the cradles are not filled with biopharmaceutical materials to their volumetric capacity in a liquid state and instead space exists to allow expansion of the biopharmaceutical materials within cradle 1202 and cradle 1702.

Further, the difference in height between each of the outer rims and the exterior surfaces of the bottoms of the holder (i.e., even after freezing of the biopharmaceutical materials) inhibits damage to the biopharmaceutical materials held in container 1010, along with container 1010 itself. In particular, the bottoms (e.g., bottoms 1200, 1770, 1870 and 1220) of the holder are recessed relative to the outer rim(s) and therefore may not contact any objects adjacent to holder 1015 or abutting holder 1015 resulting from such objects instead contacting the outer rim(s). For example, when holder 1015 lies horizontally on a surface 1502 of interior 1500 of a blast freezer, outer rim 1080 may contact the surface and outer rim 1040 may contact an object (e.g., a second holder) stacked on top of holder 1015, but neither bottom 1200 nor bottom 1220 may contact the surface or the object due to the space between the exterior surface (e.g., exterior surface 1205 and exterior surface 1875) of the bottoms and any object resulting from the difference in height between the outer rims and the exterior surfaces of the bottoms.

The outer rims (e.g., outer rim 1040 and outer rim 1080) may also have teeth to allow holder 1015 to be connected (i.e., by interlocking the teeth) to a second similar holder having complementary teeth on an outer rim thereof as shown relative to holder 1015 and 1515, for example, in FIGS. 1 and 5 of co-owned application Serial No. 11/963,106. The difference in height between the outer rims and exterior surfaces also allows the stacking of multiple holders (e.g., multiple holders 1015) on the outer rims thereof and the engagement of the corresponding teeth in contrast to stacking the exterior surfaces (e.g., exterior surface 1205) on each other. For example, the difference in heights between the outer rims and exterior surfaces is advantageous particularly when such exterior surfaces (e.g., exterior surface 1205 and exterior surface 1875) may be deformed (e.g., by a mounding effect) due to the expansion of freezing biopharmaceutical materials held in containers therein thereby making stacking difficult. In this case, the stacking of the holders on the outer rims minimizes any interference that may be caused by deformation of the exterior surfaces. More particularly, the height difference between the rims and the exterior surfaces allow the expansion of the biopharmaceutical materials held in container 1010 in cradle 1202 toward an outer surface of the outer rim (e.g., outer rims 1040 and 1080) while avoiding the exterior surfaces from extending beyond the outer surfaces of the outer rims. The expansion of the exterior surface beyond the outer rims may otherwise (i.e., absent the raised height of the rims relative to the exterior surfaces) inhibit the stacking of another holder on top of holder 1015 due to the uneven surfaces provided by the expansion of the biopharmaceuticals held in container 1010.

Outer rim 1040 may include a bottom end 1042 and outer rim 1080 may include a top end 1082, which may be connected to one another via heat sealing, or some other means of fixedly and/or sealingly connecting the outer rims to one another as depicted in FIG. 16. For example, flanges (not shown) may also be provided which extend outwardly from outer rims 1040 and 1080 to allow first portion 1115 and second portion 1117 to be mechanically fastened to each other using fasteners, such as pop rivets, ratcheting fasteners, other fasteners, screws or bolts. Also, such connection may be done by welding (e.g., heat sealing, high frequency sealing or ultra sonic welding) or with adhesive. Such a connection may inhibit contamination from passing by outer rim 1040 and outer rim 1080 toward container 1010.

The outer rims (e.g., outer rim 1040 and outer rim 1080) and the inner rims (e.g., inner rim 1030 and inner rim 1070) may include apertures such as a first aperture 1420 and a second aperture 1410 depicted in FIG. 17. to allow conduits (e.g., a conduit 1013) connected to container 1010 to pass therethrough. Such conduits may allow filling or draining of biopharmaceutical materials or other solids, liquids, or gases into and/or out of the interior (not shown) of container 1010. Conduit 1013 may also be used to insert a measurement probe (not shown) inside container 1010 (e.g., a pH electrode, a conductivity sensor, temperature probe, an ion selective electrode, a spectophotometric probe, an ultrasound sensor, an optic fiber.)

Conduit 1013 may be integral (e.g., monolithic relative) to container 1010 or it may be connectable to a receiving port (not shown) thereof. For example, conduit 1013 could be connected to a receiving port using a fitting placed within the inlet port. Fittings such as those described in U.S. Patent No. 6,186,932, may be used for the connection of such conduits. Also, fittings which can maintain the sterility of the contents of the container or flexible container may preferably be used. The fittings may be configured in different shapes, such as straight fittings and/or angled fittings including ninety (90) degree elbows, if desired. In another example, conduit 1013 may include a filter (not shown) to filter any impurities or other undesirable materials from the biopharmaceutical material. The conduit and/or fittings may be located in protective cavity 1045 and/or protective cavity 1085, which may protect conduit 1013 and the fittings from any damage resulting from impact or stress, such as the impact resulting from a person dropping holder 1015 when container 1010 is filled with biopharmaceutical materials.

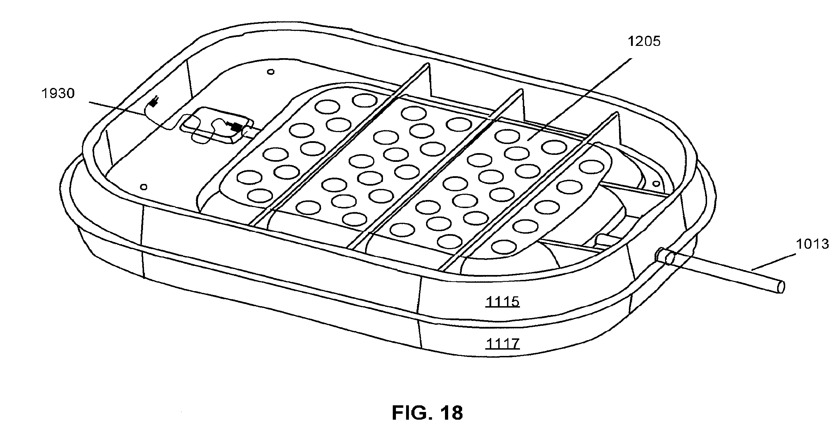

In another example depicted in FIGS. 18-19, holder 1015 receives a second container 1910 having a monitoring device 1920 (e.g., (e.g., a pH electrode, a conductivity sensor, temperature probe, an ion selective electrode, a spectophotometric probe, an ultrasound sensor, an optic fiber) extending from an interior of container 1910 through connecting portion 1750 to sample cavity 1740 where said monitoring device 1920 may couple to a connecting cable 930 or other means of coupling the monitoring device to a computing unit or controller for processing data received from the monitoring device. The monitoring device may also include data logging and wireless communication (e.g., RFID) capability. For example, an identification signal may be transferred into a RFID tag at a product filling step. Such signal may be utilized to track the product during storage and distribution phases. The monitoring device (e.g., monitoring device 1920) may record the physical parameters of the biopharmaceutical materials during the processing thereof and such data may be communicated to a computing unit at the conclusion of the processing via the coupling of the data logging system to a computing logging system or via wireless transmission during the processing thereof.

Also, the holders (e.g., holder 1015) described above may preferably be formed of materials configured to support a weight of container 1010 and to protect container 1010 from being punctured or damaged due to an impact or stress on holder 1015. For example, holder 1015 may be more rigid than container 1010 held therein. Also, the materials forming holder 1015 may remain stable and retain their structural properties over a large range of temperatures. Specifically, such materials should retain their load-bearing capacity and exhibit cold crack temperatures no higher than negative 1080 degrees Celsius while being resistant to cleaning agents and methods commonly used in biopharmaceutical manufacturing, e.g., sodium hydroxide, sodium hypochloride (e.g., CLOROX), peracetic acid, etc. For example, first portion 1115 and second portion 1117 of holder 1015 could be formed of injection molded plastic or thermo formed plastic, such as PET (e.g., Clear 0.05" PET) or HDPE (e.g., 0.080" black unfilled HDPE). Also, holder 1015 may be formed of fluoropolymer resin (e.g. TEFLON), machined plastic, stainless steel or any number of other materials including aluminum, polyethylene, polypropylene, polycarbonate, and polysulfone, for example. Further materials may include composite materials such as glass-reinforced plastic, carbon-fiber reinforced resins, or other engineering plastic materials known to offer high strength-to-weight ratios and which are serviceable at various temperatures of interest. In one example, an exterior part of the holder may be formed of a rigid or semi-rigid material while in the inner part of the holder in contact with the container may be formed of a softer material such as a foam or an elastic material. The softer material will allow expansion of the liquid biopharmaceutical material during freezing. It will be understood by those skilled in the art that each of first portion 1115 and second portion 1117 may be monolithic and formed as one piece or may include elements fixedly connected together. In addition, portions 1115 and 1117 may be constructed as one piece such that the portions 1115, 1117 may be hinged or otherwise connected together. Further, holder 1015 could be formed of a single material (e.g., injection molded plastic) or it could be formed of different materials and connected together. Also, holder 1015 may be formed of a material resistant to sterilization by gamma radiation.

Also, a holder (e.g., holder 1015) and cradles (e.g., storage cradle 1202 and sample cradle 1702) thereof may be formed, sized and/or dimensioned to receive and support containers of various sizes to provide additional rigidity and support to the container(s), thus facilitating handling, storage, and/or temperature control thereof. For example, container 1010 may be pillow shaped and holder 1015 may be elliptically shaped.

Also, it will be understood by one skilled in the art that various holders (e.g., holder 1015) may have cradles (e.g., cradle 1202, cradle 1702) configured (e.g., shaped and dimensioned) to receive various sized containers (e.g., container 1010) and to be received in a temperature control unit (e .g., a blast freezer). Although the containers are described herein as flexible containers, the containers may be made of a semi-rigid material such as polyethylene or the like. An example of such a container could include a container similar to a standard plastic milk jug. Containers made of such similar semi-rigid materials may benefit from additional rigidity supplied by attachment (e.g., fixedly or releasably) to a holder, for example. Further, the containers whether formed of a rigid, flexible or semi-rigid material, contain outer surfaces which may contact the interior surfaces of a holder which may include holes and/or may be formed of a material to facilitate heat transfer to and from a container (e.g., container 1010) held in such a holder (e.g., holder 1015) when the holder is present in a temperature control unit, such as a blast freezer. Further, the outer surfaces of the holder receiving the containers for holding the biopharmaceutical materials may be in contact with air flow in an interior (e.g., interior 1500) of a blast freezer or other means of temperature control to cause the cooling and/or heating of the container having the biopharmaceutical materials therein to cause the temperature of the biopharmaceutical materials to be controlled.

In another example, holder 1015 may be formed of a foam (e.g., HDPE, EVA), or a more rigid material (e.g., foam or solid) may be utilized with such a foam to form the holder. Also, a container, such as container 1010, may be connected to a holder, such as holder 1015, by RF welding or mechanical attachment. In a further example, a container and holder may be separated from one another within cradle 1202 and/or cradle 1702 by a layer of collapsible dimples (not shown) or ribs (not shown). Also, holders (such as holder 1015), may include a first portion (e.g., first portion 1115) and a second portion (e.g., second portion 1117) which are connected to each other by hinges to allow the interior (e.g., storage cradle 1202 and sample cradle 1702) to be accessed while the first and second portions remain connected to one another.

The biopharmaceutical material in the containers (i.e., container 1010) and holders (e.g., holder 1015) described above may thus be cooled or otherwise thermoregulated (e.g., to a subzero temperature) in a temperature control unit, such as a blast freezer providing forced convection, for example. Alternatively, the biopharmaceutical materials may be frozen in a conventional laboratory freezer providing free convention, a plate freezer or via a liquid nitrogen path. When such freezing operation is completed, the containers may be removed from the temperature control unit by removing the containers and the holders, or other support structures which the containers are received in or connected to, for example. The holders or other support structures holding the containers may be stored in a large chiller or freezer with an interior air temperature of about negative 20 degrees Celsius, for example.

A typical process for processing and/or preserving a biopharmaceutical material is described as follows. One or more containers (e.g., container 1010) is received in and/or connected to a holder (e.g., holders 1015) as depicted in FIGS. 16-19. Also, holder 1015 may be aligned substantially horizontally (e.g., such that outer rim 1040 or outer rim 1080 is flat on a surface) and biopharmaceutical material, for example liquid biopharmaceutical material, may be inserted through conduit 1013 into container 1010. Also, after biopharmaceutical material is received in the interior of the holder (e.g., holder 1015) through a conduit (e.g., conduit 1013), a sample portion (e.g., sample portion 1012), and a storage portion (e.g., storage 1011) may be sealed relative to one another (e.g., sealed in a portion of connecting portion 1014). Holder 1015 may then be located in a temperature control unit, such as an interior 1500 of a blast freezer, as shown in FIG. 16. The biopharmaceutical contents may be frozen in the temperature control to negative 20 degrees Celsius or below, for example. After the biopharmaceutical material in the container(s) is frozen, holder 1015 and the container(s) may be stored in the temperature control unit, such as a blast freezer, or removed therefrom and placed in a large freezer, for example, a walk-in freezer having an interior air temperature of about negative 20 degrees Celsius for storage, as is typically present in large medical institutions (e.g., hospitals). Also, the use of containers (e.g., container 1010) having a uniform thickness allow uniform cooling to occur within such a temperature control unit, blast freezer, or other means for controlling a temperature of the immediate surroundings of such containers. Further, the contents of sample portion 1012 may be removed from the remainder of container 1010 at any time to allow the analysis of sample portion 1012 which would provide an indication of the characteristics of both the sample portion and the storage portion, since they would both be filled with the same material and exposed to the same environmental conditions.

Also, container 1910 may be utilized with holder 1015 and the contents of container 1910 may be monitored throughout the processing described above via monitoring device 1920 which could be a temperature sensor, pH sensor or sensor for monitoring any characteristic of the biopharmaceutical materials held therein. Such monitoring may be stored on a storage medium (e.g., a computer disk, processor, flash drive, etc) and which may later be transferred to a computing unit for analysis. Alternatively, the monitoring device may be coupled to a computing unit during the processing steps, (e.g., via a computer cable or wirelessly).

Further, the above-described containers may be removed from a freezer or other system for storage of the flexible containers and contents thereof at a controlled temperature. These containers having biopharmaceutical material therein may then be received in a temperature control unit for heating, melting, agitating, mixing and/or thawing the biopharmaceutical material contained in the containers. For example, holder 1015 supporting container 1010 having frozen biopharmaceutical material therein may be placed in a temperature control unit where its temperature may be controlled (e.g. thawed) by heat transfer plates or air convection (e.g., free or forced air) heating. Also, the biopharmaceutical materials may be thawed in a water bath or in air and ambient temperature. In addition, holder 1015 may be submitted to gentle mixing inside a temperature control unit to accelerate the thawing kinetics and to minimize any solute concentration gradient in the thawed liquid.

As described above, a holder (e.g., holder 1015) may include a storage portion and a sample portion. Such holders may also include multiple such sample portions to hold sample portion(s) of containers (e.g., sample portion 1012) and/or monitoring device(s) (e.g., monitoring device 1920). For example, a holder could include a first sample cradle holding a sample portion of a container and a second sample cradle holding a monitoring device or multiple such cradles holding a combination of sample portions and monitoring devices.

From the above description, it will be understood to one skilled in the art that the containers described herein may be adapted for use in holders of various shapes or sizes. Further, the holders may be adapted to receive containers of various shapes or sizes. These holders or support structures may be configured for long or short term storage of the containers containing biopharmaceutical materials in liquid or frozen state, or may be adapted to transport the flexible containers containing biopharmaceutical materials in liquid or frozen state.

## Claims

1. A system for use in freezing, storing and thawing biopharmaceutical materials, said system comprising:
- a container (10, 1010) for holding biopharmaceutical materials therein;
- a holder (15, 1015) having a cavity (240, 1240), said container (10, 1010) being received in said cavity (240, 1240);
said holder (15, 1015) comprising a first portion (115) and a second portion (117), said container (10) being received between said first portion (115, 1115) and said second portion (117, 1117) to connect said container (10, 1010) to said holder (15, 1015),
wherein said first portion (115, 1115) comprises a bottom (200, 1200) and upwardly curving sides (210, 1210), and said second portion (117, 1117) comprises a bottom (220, 1220) and upwardly curving sides (230, 1230);
said holder (15, 1015) comprising an interior cradle (202, 1202) having a bottom and edges extending from said bottom, said cradle (202, 1202) being formed by first portion's bottom (200, 1200), first portion's curving sides (210, 1210), second portion's bottom (220, 1220), and second portion's curving sides (230, 1230), said cradle bounding said cavity;
an inner rim (30, 1030) of first portion (115, 1115) including a flat clamping or holding portion (50, 1050) and a connecting portion (60),
an inner rim (70, 1070) of second portion (117, 1117) including a flat clamping or holding portion (90, 1090) and a connecting portion (95),
wherein inner rim (30, 1030) of first portion (115, 1115) and inner rim (70, 1070) of second portion (117, 1117) bound said cavity (240, 1240),
an outer rim (40, 1040) of first portion (115, 1115) connected to said cradle (202, 1202) and separated from said cavity (240, 1240),
an outer rim (80, 1080) of second portion (117, 1117) connected to said cradle (202, 1202) and separated from said cavity (240, 1040); and
wherein said first portion's and second portion's bottoms (200, 1200, 220, 1220) each comprise an inner surface facing said cavity (240, 1240) receiving said container (10, 1010) and an outer surface, said outer surface of said first portion's bottom (200, 1200) being recessed relative to an outer surface of the outer rim (40, 1040) of first portion (115, 1115), and said outer surface of said second portion's bottom (220, 1220) being recessed relative to an outer surface of the outer rim (80, 1080) of second portion (117, 1117),
**system characterized in that**
connecting portion (60) of first portion (115, 1115) and connecting portion (95) of second portion (117, 1117) each includes multiple teeth (350, 1350) extending respectively upwardly away from first portion's bottom (200, 1200) and second portion's bottom (220, 1220), and **in that**
outer rim of first portion (115, 1115) and an outer rim of second portion (117, 1117) have teeth suitable to allow said holder (15, 1015) to be connected to a second similar holder (515, 1515).

2. The system of claim 1 wherein said cradle (202, 1202) and said container (10, 1010) comprise substantially complementary shapes such that said container (10, 1010) substantially conforms to an inner surface of said cradle (202, 1202) when said container (10, 1010) is filled with biopharmaceutical materials.

3. The system of claim 1 wherein
the holding portion (50, 1050) of the inner rim (30, 1030) of first portion (115, 1115) and the holding portion (95) of the inner rim (70, 1070) of second portion (117, 1117) are configured to hold said container (10, 1010), and
the inner rim (30, 1030) of first portion (115, 1115) and the inner rim (70, 1070) of second portion (117, 1117) allow said container (10, 1010) to move from outside the cradle (202, 1202) into the cradle (202, 1202) in response to biopharmaceutical material being inserted into said container (10, 1010).

4. The system of claim 1 further comprising a support rib (300, 1300) protruding from an outer surface of said cradle (202, 1202), said rib (300, 1300) structurally supporting said cradle (202, 1202) to substantially maintain a shape of said cradle (202, 1202) in response to an expansion of biopharmaceutical material held in said container (10) due to freezing.

5. The system of claim 1 wherein the teeth (350, 1350) of the inner rim (30, 1030) of first portion (115, 1115) and the teeth (350, 1350) of the inner rim (70, 1070) of second portion (117, 1117) are engageable with each other to connect said inner rim (30, 1030) of first portion (115, 1115) to said inner rim (70, 1070) of second portion (117, 1117).

6. The system of claim 1 wherein said outer rim (40, 1040) of first portion (115, 1115) and said outer rim (80, 1080) of second portion (117, 1117) are sealingly connected to each other.

7. The system of claim 1 further comprising at least one conduit (13, 1013) extending from said container (10, 1010) through at least an aperture (410, 420) to an exterior of said holder (15), said at least one aperture (410, 420, 1410, 1420) providing communication between said container (10, 1010) and the exterior of said holder (15, 1015).

8. The system of claim 1 wherein a protective cavity (45, 1045) is bounded by said outer rim (40, 1040) of first portion (115, 1115) and said outer rim (80, 1080) of second portion (117, 1117).

9. The system of claim 1 wherein the system further comprises a second holder (515, 1515) and teeth of outer rim of first portion (115, 1115) of holder (15, 1015) are engageable with teeth of an outer rim of a second portion of the second holder (515, 1515) to inhibit movement between said holder (15, 1015) and the second holder (515, 1515).

10. The system of claim 1 wherein first portion's and second portion's bottoms (200, 220, 1200, 1220), are moveable apart from each other in response to the biopharmaceutical material within said container (10, 1010) and said cavity (240, 1240) freezing and expanding.

11. The system of claim 10 wherein said first portion's and second portion's bottoms (200, 220, 1200, 1220) curve inwardly toward each other.

12. The system of claim 10 wherein first portion's and second portion's bottoms (200, 220, 1200, 1220) are configured to move away from each other due to the freezing such that outer surfaces of the first portion's and second portion's bottoms (200, 220, 1200, 1220) do not extend beyond outer rims of first portion (115, 1115) and second portion (117, 1117) of the holder (15, 1015).

13. The system of claim 1 wherein said container (1010) comprises a storage portion (1011) and a sample portion (1012) connected to each other by a connecting portion (1014);
said cavity comprises a storage cavity (1240) receiving said storage portion (1011) and a sample cavity (1740) receiving said sample portion (1012);
said first portion and second portion form a storage cradle (1202) bounding said storage cavity (1240);
said first portion and second portion further form a sample cradle (1702) bounding said sample cavity (1740), said sample cradle (1702) connected to said storage cradle (1202) by a connecting portion.

14. The system of claim 13 wherein said sample portion (1012) and said storage portion (1011) are sealed relative to one another to inhibit fluid communication between said sample portion (1012) and said storage portion (1011).

15. The system of claim 14 wherein said sample portion (1012) and said storage portion (1011) are sealed relative to one another at a location of the connecting portion (1014).

16. The system of claim 1 wherein the teeth (350, 1350) of connecting portion (60) of first portion (115, 1115) and connecting portion (95) of second portion (117, 1117) are alternate such that said teeth (350, 1350) are inserted into spaces between opposing teeth to connect.

## Patentansprüche

1. System zur Verwendung für das Gefrieren, Aufbewahren und Auftauen von biopharmazeutischen Materialien, wobei das System umfasst:
- einen Behälter (10, 1010) zum Halten der biopharmazeutischen Materialien darin;
- eine Halterung (15, 1015) mit einem Hohlraum (240, 1240), wobei der Behälter (10, 1010) in dem Hohlraum (240, 1240) aufgenommen ist;
wobei die Halterung (15, 1015) einen ersten Abschnitt (115) und einen zweiten Abschnitt (117) aufweist, wobei der Behälter (10) zwischen dem ersten Abschnitt (115, 1115) und dem zweiten Abschnitt (117, 1117) aufgenommen ist, um dem Behälter (10, 1010) mit der Halterung (15, 1015) zu verbinden,
wobei der erste Abschnitt (115, 1115) einen Boden (200, 1200) und aufwärts geschwungene Seiten (210, 1210) aufweist und der zweite Abschnitt (117, 1117) einen Boden (220, 1220) und aufwärts geschwungene Seiten (230, 1230) aufweist;
die Halterung (15, 1015) ein Innengestell (202, 1202) mit einem Boden und Rändern aufweist, die sich von dem Boden erstrecken, wobei das Gestell (202, 1202) durch den Boden des ersten Abschnitts (200, 1200), die geschwungenen Seiten des ersten Abschnitts (210, 1210), den Boden des zweiten Abschnitts (220, 1220) und die geschwungenen Seiten des zweiten Abschnitts (230, 1230) gebildet wird, wobei das Gestell den Hohlraum umgrenzt;
einen Innenrand (30, 1030) des ersten Abschnitts (115, 1115), der einen flachen Festklemm- oder Halteabschnitt (50, 1050) und einen Verbindungsabschnitt (60) aufweist,
einen Innenrand (70, 1070) des zweiten Abschnitts (117, 1117), der einen flachen Festklemm- oder Halteabschnitt (90, 1090) und einen Verbindungsabschnitt (95) aufweist,
wobei der Innenrand (30, 1030) des ersten Abschnitts (115, 1115) und der Innenrand (70, 1070) des zweiten Abschnitts (117, 1117) den Hohlraum (240, 1240) umgrenzen,
einen Außenrand (40, 1040) des ersten Abschnitts (115, 1115), der mit dem Gestell (202, 1202) verbunden und von dem Hohlraum (240, 1240) getrennt ist,
einen Außenrand (80, 1080) des zweiten Abschnitts (117, 1117), der mit dem Gestell (202, 1202) verbunden und von dem Hohlraum (240, ***1240***) getrennt ist,
wobei die Böden (200, 1200, 220, 1220) des ersten Abschnitts und des zweiten Abschnitts jeweils eine Innenfläche, die dem Hohlraum (240, 1240) zugewandt ist, der den Behälter (10, 1010) aufnimmt, und eine Außenfläche aufweisen, wobei die Außenfläche des Bodens (200, 1200) des ersten Abschnitts relativ zu einer Außenfläche des Außenrandes (40, 1040) des ersten Abschnitts (115, 1115) vertieft ist und die Außenfläche des Bodens (220, 1220) des zweiten Abschnitts relativ zu einer Außenfläche des Außenrandes (80, 1080) des zweiten Abschnitts (117, 1117) vertieft ist,
das System **dadurch gekennzeichnet, dass**
der Verbindungsabschnitt (60) des ersten Abschnitts (115, 1115) und der Verbindungsabschnitt (95) des zweiten Abschnitts (117, 1117) jeweils mehrere Zähne (350, 1350) aufweisen, die sich entsprechend aufwärts weg von dem Boden (200, 1200) des ersten Abschnitts und dem Boden (220, 1220) des zweiten Abschnitts erstrecken, und dadurch dass
der Außenrand des ersten Abschnitts (115, 1115) und ein Außenrand des zweiten Abschnitts (117, 1117) Zähne aufweisen, die geeignet sind, um es der Halterung (15, 1015) zu gestatten, mit einer zweiten ähnlichen Halterung (515, 1515) verbunden zu werden.

2. System nach Anspruch 1, wobei das Gestell (202, 1202) und der Behälter (10, 1010) eine im Wesentlichen komplementäre Gestalt derart aufweisen, dass der Behälter (10, 1010) im Wesentlichen mit einer Innenfläche des Gestells (202, 1202) übereinstimmt, wenn der Behälter (10, 1010) mit biopharmazeutischen Materialien gefüllt ist.

3. System nach Anspruch 1, wobei
der Halteabschnitt (50, 1050) des Innenrandes (30, 1030) des ersten Abschnitts (115, 1115) und der Halteabschnitt (95) des Innenrandes (70, 1070) des zweiten Abschnitts (117, 1117) konfiguriert sind, den Behälter (10, 1010) zu halten, und
der Innenrand (30, 1030) des ersten Abschnitts (115, 1115) und der Innenrand (70, 1070) des zweiten Abschnitts (117, 1117) es dem Behälter (10, 1010) gestatten, sich als Reaktion auf biopharmazeutisches Material, das in den Behälter (10. 1010) eingelegt wird, von außerhalb des Gestells (202, 1202) in das Gestell (202, 1202) zu bewegen.

4. System nach Anspruch 1, ferner umfassend eine Stützrippe (300, 1300), die von einer Außenfläche des Gestells (202, 1202) hervorsteht, wobei die Rippe (300, 1300) strukturmäßig das Gestell (202, 1202) stützt, um im Wesentlichen eine Form des Gestells (202, 1202) als Reaktion auf eine Ausweitung des biopharmazeutischen Materials, das in dem Behälter (10) enthalten ist, aufgrund des Gefrierens aufrecht zu halten.

5. System nach Anspruch 1, wobei die Zähne (350, 1350) des Innenrandes (30, 1030) des ersten Abschnitts (115, 1115) und die Zähne (350, 1350) des Innenrandes (70, 1070) des zweiten Abschnitts (117, 1117) miteinander in Eingriff bringbar sind, um den Innenrand (30, 1030) des ersten Abschnitts (115, 1115) mit dem Innenrand (70, 1070) des zweiten Abschnitts (117, 1117) zu verbinden.

6. System nach Anspruch 1, wobei der Außenrand (40, 1040) des ersten Abschnitts (115, 1115) und der Außenrand (80, 1080) des zweiten Abschnitts (117, 1117) abdichtend miteinander verbunden sind.

7. System nach Anspruch 1, ferner umfassend mindestens eine Leitung (13, 1013), die sich von dem Behälter (10, 1010) durch mindestens eine Öffnung (410, 420) zu einer Außenseite der Halterung (15) erstreckt, wobei die mindestens eine Öffnung (410, 420, 1410, 1420) eine Verbindung zwischen dem Behälter (10, 1010) und der Außenseite der Halterung (15, 1015) bereitstellt.

8. System nach Anspruch 1, wobei ein Schutzhohlraum(45, 1045) durch den Außenrand (40, 1040) des ersten Abschnitts (115, 1115) und den Außenrand (80, 1080) des zweiten Abschnitts (117, 1117) umgrenzt ist.

9. System nach Anspruch 1, wobei das System ferner eine zweite Halterung (515, 1515) aufweist und Zähne an dem Außenrand (115, 1115) der Halterung (15, 1015) mit Zähnen eines Außenrandes eines zweiten Abschnitts der zweiten Halterung (515, 1515) in Eingriff bringbar sind, um eine Bewegung zwischen der Halterung (15, 1015) und der zweiten Halterung (515, 1515) zu verhindern.

10. System nach Anspruch 1, wobei die Böden (200, 220, 1200, 1220) der ersten Abschnitte und der zweiten Abschnitte als Reaktion auf das Gefrieren und Ausdehnen des biopharmazeutischen Materials in dem Behälter (10, 1010) und dem Hohlraum (240, 1240) voneinander weg bewegbar sind.

11. System nach Anspruch 10, wobei die Böden (200, 220, 1200, 1220) der ersten Abschnitte und der zweiten Abschnitte sich nach innen aufeinander zu biegen.

12. System nach Anspruch 10, wobei die Böden (200, 220, 1200, 1220) der ersten Abschnitte und der zweiten Abschnitte konfiguriert sind, sich aufgrund des Gefrierens derart voneinander weg zu bewegen, dass die Außenflächen der Böden (200, 220, 1200, 1220) der ersten Abschnitte und der zweiten Abschnitte nicht über die Außenränder des ersten Abschnitts (115, 1115) und des zweiten Abschnitts (117, 1117) der Halterung (15, 1015) hinausragen.

13. System nach Anspruch 1, wobei der Behälter (1010) einen Aufbewahrungsabschnitt (1011) und einen Probenabschnitt (1012) umfasst, welche durch einen Verbindungsabschnitt (1014) miteinander verbunden sind;
wobei der Hohlraum einen Aufbewahrungshohlraum (1240), welcher den Aufbewahrungsabschnitt (1011) aufnimmt, und einen Probenhohlraum (1740) aufweist, welcher den Probenabschnitt (1012) aufnimmt;
wobei der erste Abschnitt und der zweite Abschnitt ein Aufbewahrungsgestell (1202) bilden, welches den Aufbewahrungshohlraum (1240) umgrenzt;
wobei der erste Abschnitt und der zweite Abschnitt ferner ein Probengestell (1702) aufweisen, welches den Probenhohlraum (1740) umgrenzt, wobei das Probengestell (1702) über einen Verbindungsabschnitt mit dem Aufbewahrungsgestell (1202) verbunden ist.

14. System nach Anspruch 13, wobei der Probenabschnitt (1012) und der Aufbewahrungsabschnitt (1011) relativ zueinander abgedichtet sind, um eine Fluidverbindung zwischen dem Probenabschnitt (1012) und dem Aufbewahrungsabschnitt (1011) zu verhindern.

15. System nach Anspruch 14, wobei der Probenabschnitt (1012) und der Aufbewahrungsabschnitt (1011) relativ zueinander an einer Stelle des Verbindungsabschnitts (1014) abgedichtet sind.

16. System nach Anspruch 1, wobei die Zähne (350, 1350) des Verbindungsabschnitts (60) des ersten Abschnitts (115, 1115) und des Verbindungsabschnitts (95) des zweiten Abschnitts (117, 1117) derart abwechselnd sind, dass die Zähne (350, 1350) in Zwischenräume zwischen gegenüberliegenden Zähnen zum Verbinden eingesetzt werden.

## Revendications

1. Système utilisé pour congeler, stocker et décongeler des matériaux biopharmaceutiques, ledit système comprenant :
- un récipient (10, 1010) destiné à contenir des matériaux biopharmaceutiques ;
- un support (15, 1015) doté d'une cavité (240, 1240), ledit récipient (10, 1010) étant reçu dans ladite cavité (240, 1240) ;
ledit support (15, 1015) comprenant une première portion (115) et une seconde portion (117), ledit récipient (10) étant reçu entre ladite première portion (115, 1115) et ladite seconde portion (117, 1117) pour raccorder ledit récipient (10, 1010) audit support (15, 1015) ;
dans lequel ladite première portion (115, 1115) comprend un fond (200, 1200) et des côtés s'incurvant vers le haut (210, 1210), et ladite seconde portion (117, 1117) comprend un fond (220, 1220) et des côtés s'incurvant vers le haut (230, 1230) ;
ledit support (15, 1015) comprenant un berceau intérieur (202, 1202) ayant un fond et des bords s'étendant à partir dudit fond, ledit berceau (202, 1202) étant formé par le fond de la première portion (200, 1200), les côtés s'incurvant de la première portion (210, 1210), le fond de la seconde portion (220, 1220) et les côtés s'incurvant de la seconde portion (230, 1230), ledit berceau délimitant ladite cavité ;
un rebord interne (30, 1030) de la première portion (115, 1115) comprenant une portion plate de serrage ou de retenue (50, 1050) et une portion de raccordement (60), un rebord interne (70, 1070) de la seconde portion (117, 1117) comprenant une portion plate de serrage ou de retenue (90, 1090) et une portion de raccordement (95), dans lequel un rebord interne (30, 1030) de la première portion (115, 1115) et un rebord interne (70, 1070) de la seconde portion (117, 1117) délimitent ladite cavité (240, 1240),
un rebord externe (40, 1040) de la première portion (115, 1115) raccordé audit berceau (202, 1202) et séparé de ladite cavité (240, 1240),
un rebord externe (80, 1080) de la seconde portion (117, 1117) raccordé audit berceau (202, 1202) et séparé de ladite cavité (240, 1240) ; et
dans lequel lesdits fonds de la première portion et de la seconde portion (200, 1200, 220, 1220) comprennent chacun une surface interne en regard de ladite cavité (240, 1240) recevant ledit récipient (10, 1010) et une surface externe, ladite surface externe dudit fond de la première portion (200, 1200) étant en retrait par rapport à une surface externe du rebord externe (40, 1040) de la première portion (115, 1115), et ladite surface externe dudit fond de la seconde portion (220, 1220) étant en retrait par rapport à une surface externe du rebord externe (80, 1080) de la seconde portion (117, 1117),
le système étant **caractérisé en ce que**
la portion de raccordement (60) de la première portion (115, 1115) et la portion de raccordement (95) de la seconde portion (117, 1117) comprennent chacune de multiples dents (350, 1350) s'étendant respectivement vers le haut du fond de la première portion (200, 1200) et du fond de la seconde portion (220, 1220) et **en ce que**
le rebord externe de la première portion (115, 1115) et le rebord externe de la seconde portion (117, 1117) comprennent des dents adaptées pour permettre audit support (15, 1015) d'être raccordé à un second support (515, 1515) similaire.

2. Système selon la revendication 1, dans lequel ledit berceau (202, 1202) et ledit récipient (10, 1010) ont des formes sensiblement complémentaires de sorte que ledit récipient (10, 1010) se conforme sensiblement à une surface interne dudit berceau (202, 1202) lorsque ledit récipient (10, 1010) est rempli de matériaux biopharmaceutiques.

3. Système selon la revendication 1, dans lequel
la portion de retenue (50, 1050) du rebord interne (30, 1030) de la première portion (115, 1115) et la portion de retenue (95) du rebord interne (70, 1070) de la seconde portion (117, 1117) sont configurées pour retenir ledit récipient (10, 1010), et
le rebord interne (30, 1030) de la première portion (115, 1115) et le rebord interne (70, 1070) de la seconde portion (117, 1117) permettent audit récipient (10, 1010) de se déplacer de l'extérieur du berceau (202, 1202) à l'intérieur du berceau (202, 1202) en réponse à l'insertion d'un matériau biopharmaceutique dans ledit récipient (10, 1010).

4. Système selon la revendication 1, comprenant en outre une nervure de support (300, 1300) faisant saillie à partir d'une surface externe dudit berceau (202, 1202), ladite nervure (300, 1300) supportant structurellement ledit berceau (202, 1202) afin de maintenir sensiblement une forme dudit berceau (202, 1202) en réponse à une expansion du matériau biopharmaceutique retenu dans ledit récipient (10) due à la congélation.

5. Système selon la revendication 1, dans lequel les dents (350, 1350) du rebord interne (30, 1030) de la première portion (115, 1115) et les dents (350, 1350) du rebord interne (70, 1070) de la seconde portion (117, 1117) peuvent être enclenchées les unes avec les autres pour raccorder ledit rebord interne (30, 1030) de la première portion (115, 1115) audit rebord interne (70, 1070) de la seconde portion (117, 1117).

6. Système selon la revendication 1, dans lequel ledit rebord externe (40, 1040) de la première portion (115, 1115) et ledit rebord externe (80, 1080) de la seconde portion (117, 1117) sont raccordés l'un à l'autre de façon étanche.

7. Système selon la revendication 1, comprenant en outre au moins une conduite (13, 1013) s'étendant à partir dudit récipient (10, 1010) à travers au moins une ouverture (410, 420) vers un extérieur dudit support (15), ladite au moins une ouverture (410, 420, 1410, 1420) assurant une communication entre ledit récipient (10, 1010) et l'extérieur dudit support (15, 1015).

8. Système selon la revendication 1, dans lequel une cavité protectrice (45, 1045) est délimitée par ledit rebord externe (40, 1040) de la première portion (115, 1115) et ledit rebord externe (80, 1080) de la seconde portion (117, 1117).

9. Système selon la revendication 1, dans lequel le système comprend en outre un second support (515, 1515) et des dents du rebord externe de la première portion (115, 1115) du support (15, 1015) peuvent être enclenchées avec des dents d'un rebord externe d'une seconde portion du second support (515, 1515) pour empêcher un mouvement entre ledit support (15, 1015) et le second support (515, 1515).

10. Système selon la revendication 1, dans lequel les fonds de la première portion et de la seconde portion (200, 220, 1200, 1220) peuvent être éloignés l'un de l'autre en réponse à la congélation et à l'expansion du matériau biopharmaceutique à l'intérieur dudit récipient (10, 1010) et de ladite cavité (240, 1240).

11. Système selon la revendication 10, dans lequel lesdits fonds de la première et de la seconde portion (200, 220, 1200, 1220) s'incurvent vers l'intérieur l'un vers l'autre.

12. Système selon la revendication 10, dans lequel les fonds de la première portion et de la seconde portion (200, 220, 1200, 1220) sont configurés pour s'éloigner l'un de l'autre en raison de la congélation de sorte que les surfaces externes des fonds de la première portion et de la seconde portion (200, 220, 1200, 1220) ne s'étendent pas au-delà des rebords externes de la première portion (115, 1115) et de la seconde portion (117, 1117) du support (15, 1015).

13. Système selon la revendication 1, dans lequel ledit récipient (1010) comprend une portion de stockage (1011) et une portion d'échantillon (1012) raccordées l'une à l'autre par une portion de raccordement (1014) ;
ladite cavité comprend une cavité de stockage (1240) recevant ladite portion de stockage (1011) et une cavité d'échantillon (1740) recevant ladite portion d'échantillon (1012) ;
lesdites première portion et seconde portion forment un berceau de stockage (1202) délimitant ladite cavité de stockage (1240) ;
lesdites première portion et seconde portion forment en outre un berceau d'échantillon (1702) délimitant ladite cavité d'échantillon (1740), ledit berceau d'échantillon (1702) étant raccordé audit berceau de stockage (1202) par une portion de raccordement.

14. Système selon la revendication 13, dans lequel ladite portion d'échantillon (1012) et ladite portion de stockage (1011) sont étanches l'une par rapport à l'autre afin d'empêcher une communication fluidique entre ladite portion d'échantillon (1012) et ladite portion de stockage (1011).

15. Système selon la revendication 14, dans lequel ladite portion d'échantillon (1012) et ladite portion de stockage (1011) sont étanches l'une par rapport à l'autre en un emplacement de la portion de raccordement (1014).

16. Système selon la revendication 1, dans lequel les dents (350, 1350) de la portion de raccordement (60) de la première portion (115, 1115) et de la portion de raccordement (95) de la seconde portion (117, 1117) sont alternées de sorte que lesdites dents (350, 1350) soient insérées dans des espaces entre des dents opposées à raccorder.
